# EUROPÄISCHE PATENTSCHRIFT

(11) **EP 2 158 432 B1**
(45) Veröffentlichungstag und Bekanntmachung des Hinweises auf die Patenterteilung: **29.07.2015**
(21) Anmeldenummer: 08701038.5
(22) Anmeldetag: 09.01.2008
(51) Int. Cl.: F01K 3/00, F28D 15/02, F28F 1/14, F24H 7/04, F28D 20/00, F28F 1/12

(54) **ALLZWECKWÄRMESPEICHER ZUR SPEICHERUNG VERSCHIEDENER ARTEN VON ENERGIE**
ALL-PURPOSE HEAT STORE FOR STORING DIFFERENT TYPES OF ENERGY
ACCUMULATEUR THERMIQUE UNIVERSEL POUR LE STOCKAGE DE DIFFÉRENTS TYPES D'ÉNERGIE

(30) Priorität: 04.05.2007 DE 102007021500; 05.09.2007 DE 102007042166; 27.09.2007 DE 102007046133
(43) Veröffentlichungstag der Anmeldung: 03.03.2010
(73) Patentinhaber: Jess GmbH Energiespeichersysteme, 77731 Willstätt (DE)
(72) Erfinder: PETROVIC, Vladan, 34000 Kragujevac (YU)
(74) Vertreter: Mierswa, Klaus
(86) Internationale Anmeldenummer: PCT/EP2008/000105
(87) Internationale Veröffentlichungsnummer: WO 2008/135100

(56) Entgegenhaltungen:
- CH-A- 220 155
- DE-A1- 2 117 103
- DE-U- 7 010 442
- GB-A- 1 217 798
- GB-A- 1 344 486

## Beschreibung

### Technisches Gebiet:

Die Erfindung betrifft einen Allzweckwärmespeicher zur Speicherung verschiedener Arten von Energie, wie erneuerbare Energie, Wind- oder Sonnenenergie, Nachtstrom sowie Stromenergie im Allgemeinen als auch Energie aus festen, gasförmigen und/oder flüssigen Brennstoffen, von Energie aus Biomasse sowie von Abfallwärme aus der Industrie, wobei die Energiespeicherung in Wärmespeicherblöcken erfolgt, in denen durch die Energiespeicherung erhitzbare Verdampfungsrohre eingebettet sind, in die ein flüssiges. Kondensat in vorgegebener Menge eintropft, wodurch sich in den Verdampferrohren Dampf bildet, dessen Wärmeinhalt für Heizzwecke oder Sekundärenergieerzeugung nutzbar ist, und wobei das Kondensat in einem Kreislauf geführt ist.

Die Erfindung betrifft des Weiteren einen Allzweckwärmespeicher zur effizienten Nutzung der gespeicherten Energie in Form der Wärme, des Wasserdampfes, des elektrischen Stromes oder als chemische Energie in Form der Produktgase oder in Form der flüssigen Brennstoffe.

### Stand der Technik:

Es werden heute zahlreiche Forschungsaktivitäten hinsichtlich der Energiespeicherung getätigt, jedoch sind die Ergebnisse mehr als bescheiden. Besonders wird im Bereich der Langzeitwärmespeicher geforscht mit dem Ziel, alternative Energien zu speichern, um die Diskrepanz zwischen der Energieentstehung und dem Energieverbrauch zu überwinden. In der Literatur werden einige Arten der Langzeitwärmespeicher mit den jeweiligen Speicherkapazitäten genannt, wie folgt:
▪ Heißwasserspeicher mit gedämmtem, wassergefülltem Raum, Speicherkapazität 60-80 kWh/m³
▪ Wasserkies-Gemisch-Wärmespeicher mit gedämmtem Wasser-Kies-Gemisch unterirdisch, Speicherkapazität 30-50 kWh/m³
▪ Wärmespeicher mit Erdsonden, senkrechte Sonden in wassergesättigtem Erdreich, Speicherkapazität 15-30 kWh/m³
▪ Aquifer, natürlich vorkommende abgeschlossene Grundwasserschicht, Speicherkapazität 30-40 m³/h

Neben den aufgeführten Langzeitwärmespeichern sind noch zu erwähnen:
▪ Das Energiespeichersystem, das mit dem "Platts Global Energy Award" ausgezeichnet wurde, besteht aus 13.760 wiederaufladbaren Nickel-Cadmium Hochleistungszellen und einem Stromrichter, der den Gleichstrom der Batterien in Wechselstrom umwandelt. Die in vier parallelen Reihen angeordneten Zellen liefern eine Netzspannung von 5.000 Volt und besitzen eine Speicherkapazität 3.680 Amperestunden. Das unter Federführung von ABB entwickelte System kann 15 Minuten lang eine Leistung von 27 Megawatt bereitstellen und damit eine Zeitspanne überbrücken, welche man benötigt, um Gasturbinenkraftwerke aus dem Stillstand hochzufahren. Die Anlage ist 1.300 Tonnen schwer und füllt ein ganzes Fußballfeld.
▪ In Norton, US-Bundesstaat Ohio, soll bald mit dem Bau des weltweit größten Luftspeicherkraftwerks begonnen werden. Die Pressluft wird in einer stillgelegten Kalksteinmine gespeichert. In vollem Betrieb soll die Anlage 675.000 Häuser für zwei Tage mit Elektrizität versorgen können.
▪ Im Rahmen des Verbundprojektes INES (Inovative Energy Storage Systems) werden im Laufe der nächsten beiden Jahre unterschiedliche Kohlenstoff-Nanostrukturen auf ihren möglichen Einsatz in neuen Energiespeichersystemen getestet. Auf der Materialseite stehen dabei Kohlenstoff-Nanofasern und Nanotubes im Vordergrund. Sie sollen als Niederdruck-Wasserstoffspeicher für Brennstoffzellen in mobilen Anwendungen, als Wasserstoffreservoir in Nickelhydridbatterien und als Komponenten poröser Elektroden in Lithiumionenbatterien hergestellt, untersucht und optimiert werden.
▪ Das Forschungszentrum Karlsruhe und die Universität Karlsruhe entwickeln gemeinsam einen supraleitenden Energiespeicher unter dem Namen "Schneller Kompensator", der in einem Sägewerk eingesetzt werden soll. Kernstück der Anlage sind eine supraleitende Spule aus Niob(Nb)-Titan(Ti)-Draht, die mit flüssigem Helium auf 4.3 Kelvin (=269°C) gekühlt wird und in diesem Zustand elektrische Energie praktisch verlustlos speichern kann, sowie ein schneller leistungselektronischer Umrichter, über den das System an das 400 Volt-Drehstromnetz angeschlossen ist. Die Energiespeicherkapazität beträgt max. 200 Kilojoule(kJ).

Unterdessen laufen einige Entwicklungen von Wärmespeichern in kleinerem Maßstab, wie
▪ Pufferspeicher für Solarsysteme, bei denen das Wasser von der Sonnenenergie aufgewärmt und diese Energie für das Brauchwasser genutzt wird.
▪ Kombispeicher speichern ebenfalls Solarenergie für Brauchwasser. Zusätzlich ist eine elektrische Heizung eingebaut und die Speicher werden mit der Zentralheizung kombiniert.
▪ Latentwärmespeicher, die auf dem Prinzip basieren, dass während des Phasenwechsels das PCM (Phase change material) eine bestimmte Wärmemenge absorbiert, die sogenannte Schmelzwärme. Da sich hierbei die Temperatur des PCM trotz Wärmezufuhr nicht ändert, spricht man auch von latenter (versteckter) Wärme. Diese Wärmespeicher arbeiten im Temperaturbereich bis max. 200°C. Die Stoffe, die für Latentwärmespeicher genutzt werden, sind:
   o Salz-Wasser-Eutektika = 0°C
   o Parafine -30°C - 130°C
   o Salzhydrate 5°C - 130°C
   o Zuckeralkohole 90°C-180°C
   o Salze und deren eutektische Mischungen = 180°C
▪ Mobile Latentwärmespeicher (makroverkapselt): PCM-Schmelzpunkt 58°C, Einleittemperatur von 56°C - 180°C, Speicherkapazität 3,5 MWh, wärmeverbrauchendes Unternehmen: 2.500 MWh/a (20-30 km Entfernung)

Es stellt sich die Frage: Warum ist die Energiespeicherung wichtig? Großtechnische Kraftwerke arbeiten bekanntlich am wirtschaftlichsten im gleichmäßigen Dauerbetrieb. Während der Nachtstunden, aber besonders in der Zeit zwischen 22, 63.00 Uhr und 6.00 Uhr, wird jedoch nicht die gesamte erzeugte Elektroenergie benötigt. Um eine möglichst gleichmäßige Auslastung der Kraftwerkskapazitäten zu erreichen, wurde Mitte der 60-Jahre die Nachtspeicherheizung entwickelt. Sie nutzt das "Abfallprodukt" Nachtstrom, das von EVUs im Rahmen von Sonderverträgen besonders günstig abgegeben wird, um den Speicherkern der Geräte aufzuladen. Dieser gibt die gespeicherte Wärme dann über den Tag verteilt nach Bedarf ab, wobei das Zusammenspiel von Wärmedämmung und Gebläsetechnik die exakte Dosierung der Raumheizung ermöglicht und Verluste an gespeicherter Wärme weitgehend verhindern soll. Bisher haben Elektrospeicherheizungen somit auch zur Verminderung des Verschleißes in den Kraftwerken einen wesentlichen Beitrag geleistet und nicht unbedeutend zur Preisstabilität der Elektroenergie beigetragen.

Die Kriterien für einen guten Energiespeicher kann man wie folgt zusammenfassen:
▪ Eine Bauform, die der Vielfalt an Anforderungen möglichst oft gerecht wird.
▪ Durchdachte, praxiserprobte Anschlüsse, die eine schnelle Montage auf der Baustelle ermöglichen.
▪ Solide Konstruktion, die eine lange Lebensdauer gewährleistet.
▪ Hochwertige Isolation, um die Verlustleistung minimal und den Wirkungsgrad hoch zu halten.
▪ Große Speicherleistung pro Volumeneinheit.
▪ Es soll die Möglichkeit bestehen, die Energie mit hohen Temperaturen zu speichern, um exegetische Verluste zu minimieren.
▪ die Speichermasse soll möglichst aus handelsüblichen Baustoffen hergestellt werden.
▪ die Energieentkoppelung soll möglichst in der Nähe der Temperaturen der Speichermasse liegen.
▪ Preiswerte Ausführung.
▪ Die Zeitspanne zwischen dem Energieabruf und dem Beharrungszustand bei der Energieentkoppelung soll kurz sein.
▪ Der Energieverlust vom Energiespeicher zum Energieverbraucher soll minimiert werden.

Durch die DE 21 17 103 A1 ist ein Verfahren zum Erzeugen eines erhitzten Mediums für Beheizungszwecke durch Anwendung elektrischer Energie bekannt geworden, bei dem ein von einer Isolation umgebener metallischer Block durch elektrische Aufheizung mittels elektrische Induktion zu einem Wärmespeicher zwischen 200 GradC bis 1000 GradC erhitzt wird und der Wärmespeicher zur Erhitzung des aufzuheizenden Mediums genutzt wird, welches in einem Kreislauf ganz oder teilweise zum Wärmespeicher zurückgeführt wird. Zur Heizdampferzeugung wird Wasser in einem Kanal im erhitzten metallischen Block eingespritzt. Der entstehende Dampf wird aus dem erhitzten Block ausgeleitet, kondensiert und das Kondensat wieder zum Kanal zurückgeführt. Diese Schrift bildet den

Oberbegriff des Anspruchs 1.

Durch die DE 70 10 442 U ist ein Heizkessel zur Erhitzung von Wasser bekannt geworden, mit einem über ein Verbindungsrohr mit einer Wasserzuführungsquelle verbundenen Dampf- und Wasserraum, von welchem ein Durchführungskanal ausgeht, der in einen thermischen Speicherkem eingeführt ist, der eine Dampföffnung und ein Wasserzuführungsloch aufweist, wobei das Wasserzuführungsloch unterhalb der Dampföffnung angeordnet ist, so dass der sich durch die Verdampfung von Wasser innerhalb des Durchführungskanals entwickelnde Dampfdruck den Wasserpegel in dem Dampf- und Wasserraum ausserhalb des Durchführungskanals nach unten unterhalb des Zuführungsloches drückt.

Schließlich ist aus GB 13444896 A ein Heizsystem bekannt, das elektrisch beheizbare Wärmespeicherblöcke aufweist. Das Heizsystem umfasst ferner einen Kondensator, der über ein Dampfrohr mit den Wärmespeicherblöcken verbunden ist, wobei der Kondensator oberhalb der Wärmespeicherblöcke angeordnet ist. Der Wasserdampf gelangt somit von den Wärmespeicherblöcken in den Kondensator, wo der Wasserdampf kondensiert.

### Technische Aufgabe:

Der Erfindung liegt die Aufgabe zugrunde, einen Wärmespeicher als Allzweckwärmespeicher zu schaffen, der möglichst die genannten Forderungen erfüllt.

### Offenbarung der Erfindung sowie deren Vorteile:

Die Lösung der Aufgabe besteht bei einem Allzweckwärmespeicher der eingangs genannten Gattung darin, dass oberhalb der in den Wärmespeicherblöcken angeordneten Verdampfungsrohre ein zweiteiliger, aus einem oberen ersten und einem unteren zweiten Teil bestehender Behälter aufgesetzt ist, in welchem sich im oberen Teil, welcher als Dampfsammelkammer ausgebildet ist, die Dampfbrüden bzw. das Dampfkondensat sammelbar, sind die anschließend mittels eines Wärmetauschers kondensiebar sind und mittels einer Absperreinrichtung in den unteren Teil, welcher als Dosierkammer fungiert des Behälters einleitbar sind.

Es sind oberhalb der Verdampfungsrohre düsenförmige Regelelemente vorgesehen, welche das Kondensat gleichmäßig auf die Verdampfungsrohre verteilen. In weiterer Ausgestaltung der Erfindung kondensiert der in den Verdampferrohren entstandene Dampf innerhalb eines Dampfraumes an einem Wärmetauscher, wobei die abgegebene Wärme einer Heizungsanlage übergeben werden kann. Der Wärmetauscher ist bevorzugt in einem Kondensatsammelbehälter angeordnet, aus der das Kondensat in einem Kreislauf wieder in die Verdampfungsrohre rückführbar ist.

Innerhalb der Wärmespeicherblöcke ist zur Energiespeicherung ein Brennraum für den Aufsatz eines Gas- oder Ölbrenners angeordnet, wobei die quaderförmigen Wärmespeicherblöcke in einem bestimmtem Abstand s voneinander angeordnet sind zur Bildung von Rauchgaskanälen, durch die die Rauchgase strömen und ihre Wärme an die Wärmespeichermasse abgeben.

Der Wärmespeicher ist somit dergestalt konzipiert, dass die Wärmespeichermasse in Form eines Quaders oder Würfels geformt ist, in dessen Mitte wenigstens ein Rohrstück eingebracht ist, welches an einem Ende, bevorzugt das untere Ende, verschlossen ist. Am Rohrstück sind Blechstücke seitlich angeschweißt, um die Wärmeleitung von der Speichermasse zum Rohr zu vergrößern. Die Speichermasse wird aus Schamottmehl und/oder aus gemahlenen Ziegelsteinen und/oder aus zermahlenem Porzellan und/oder aus üblichem Beton angefertigt, wobei der Zement, welcher für die feuerfesten Baustoffe vorgesehen ist, vermischt wird. Durch die Wasserzugabe wird der feuerfeste Mörtel angefertigt. In einer speziell geformten Schalung wird der feuerfeste Mörtel eingegossen, um quaderförmige Wärmespeicherblöcke herzustellen. In der Mitte des Quaders wird das Rohrstück, das an einem Ende verschlossen ist, eingebracht und mit der feuerfesten Masse fest verbunden.

Falls die Wärmespeichermasse für die Speicherung der elektrischen Energie benutzt wird, sind seitlich auf bestimmten Quaderhöhen Kanäle für den Heizstab vorgesehen, in die die Heizstäbe eingebettet werden können.

Die quaderförmigen Wärmespeicherblöcke oder -elemente werden nebeneinander angeordnet und bilden somit zusammen eine kompakte Einheit. Die Verdampfungsrohre ragen aus der Wärmespeichermasse hinaus. Am Austritt sind die Verdampfungsrohre mit Gewindeanschlüssen versehen, die ermöglichen, dass das Deckungsblech mit den Verdampfungsrohren und mittels der Dichtungen wasserdicht befestigt wird. Das Deckungsblech liegt auf einer Scheibe auf, die mit dem Verdampfungsrohr verschweißt ist. Die eventuell kondensierte Feuchte sammelt sich auf dem Deckungsblech und durch die abstrahlende Wärme verdampft es wieder.

Die Energieentnahme aus der Wärmespeichermasse erfolgt dergestalt, dass das Wasser in kontrollierter Menge in die heißen Verdampfungsrohre hineintropft, schlagartig verdampft und der Dampf mittels eines Wärmetauschers anschließend kondensiert wird. Durch den Wärmetauscher strömt das Heizungswasser, angetrieben durch eine Flüssigkeitskreiselpumpe. Die Kondensationswärme wird an den Heizungskreislauf übertragen.

Unter dem Wärmetauscher ist ein Kondensatsammelbehälter angebracht, dessen Aufgabe es ist, das Kondensat aufzufangen. Das Kondensat wird durch die Schwerkraft in die Verdampfungsrohre zurückgeführt, um die Speicherwärme wieder aufzunehmen.

Um das Kondensat auf die Verdampfungsrohre gleichmäßig zu verteilen, sind oberhalb eines jeden Verdampfungsrohres oder auch Wärmetauscherrohres Verteilungsdüsen angebracht, mittels denen die gewünschte Durchflussmenge in den jeweiligen Verdampfungsrohren eingestellt werden kann. Die Kondensatzuführung zu den Verdampfungsrohren erfolgt mittels der Rohrleitungen, die oberhalb der Verdampfungsrohre angebracht sind.

Eine Stahlplatte, Deckungsplatte, ist aus rostfreiem Stahl vorgesehen und ist mit dem Außenflansch des Wärmespeicherkessels in Sandwich-Form mittels einer Dichtung luftdicht befestigt.

Um den Druckanstieg im Dampfraum in Grenzen zu halten, ist ein U-Rohr vorgesehen, das mit Wasser befüllt und mit der Atmosphäre verbunden ist. Das U-Rohr ist mit dem Abfluss verbunden, um zu verhindern, dass der Dampf in den Raum hinaustritt.

Ein Auffangbehälter für die Wärmespeichermasse ist aus üblichem Stahl angefertigt. Der ganze Energiespeicher ist außen herum mit Mineralwolle isoliert.

Es besteht die Möglichkeit, einen Öl- und/oder Gasbrenner in den Energiespeicher zu integrieren auf die Weise, dass die Wärmespeicherblöcke in einer Anordnung aufgestellt werden, dass zwischen den Wärmespeicherblöcken Rauchgaskanäle gebildet werden, durch die die Rauchgase strömen. Die durch die Kanäle strömende Energie besitzt eine Temperatur, die nicht viel höher über der Kondensationstemperatur des Wasserdampfes in den Rauchgasen liegt. Dadurch wird ein hoher Wirkungsgrad des Energiespeichers erreicht.

Die Regelung der Wärmeentnahme aus dem Energiespeicher erfolgt auf die Weise, dass sich bei einem Wärmebedarf das Magnetventil öffnet und das Kondensat aus dem Kondensatsammelbehälter durch die Verteilerrohre in die Verdampfungsrohre, die in der Wärmespeichermasse eingegossen sind, fließt. Nach dem Magnetventil ist ein Nadelventil vorgesehen, das so eingestellt ist, dass der Kondensatdurchfluss der Wärmeleistung der Heizungsanlage angepasst wird. Vorzugsweise kann deshalb der Kondensatdurchfluss in der Wärmeleistung der Heizungsanlage geregelt werden.

Es besteht noch die Möglichkeit, den Behälter anstatt mit Wärmespeicherblöcken (nach vorgenanntem Prinzip hergestellt) mit Granulat aus Lavagestein, Stahlkugeln oder Quarzglas zu befüllen, wobei in bestimmten Abständen voneinander die Elektroheizstäbe in der Schüttung eingebettet werden. Dadurch geben sie ihre Wärme an das Granulat ab. Das Granulat wird auf eine Temperatur von 700°C aufgewärmt. Der Behälter wird von außen mit Mineralwolle isoliert. Die Wärme wird von den Heizstäben an das Granulat durch Strahlung übertragen. Die effektive Wärmeleitfähigkeit des Granulates bewegt sich laut Berechnung zwischen 0,7 und 1 W/mK (dabei ist die Wärmestrahlung des im Zwischenkornvolumen befindlichen Gases nicht berücksichtigt).

Hier gelten die Gesetze der instationären Wärmeleitung in Abhängigkeit von der Korngröße, der Größe des Zwischenkornvolumens, der Schichtdicke, des Mediums des Zwischenkornvolumens, der Korndichte sowie der spezifischen Wärmekapazität und der Wärmeleitfähigkeit des Granulats.

Der restliche Aufbau, bezogen auf den Kondensator, die Kondensatrückführung und die Regelung bleibt derselbe. Bei dieser Variante mit der Wärmespeichermasse aus Granulat werden ebenso die Düsen und die Verteilerrohre über der Wärmespeichermasse benötigt, um das Kondensat gleichmäßig über das Granulat zu verteilen. Bei dieser Variante ist auch die Möglichkeit gegeben, den Öl- oder Gasbrenner in den Energiespeicher zu integrieren. Der Brenner kann nach Bedarf ein-/ zugeschaltet werden, um Wärme zu speichern.

Die Regelung der Wärmeentnahme aus dem Energiespeicher erfolgt auf die Weise, dass sich bei Wärmebedarf das Magnetventil öffnet und das Kondensat aus dem Kondensatsammelbehälter durch die Verteilerrohre in die Verdampfungsrohre fließt. Nach dem Magnetventil ist ein Nadelventil vorgesehen, das so eingestellt wird, dass der Kondensatdurchfluss der Wärmeleistung der Heizungsanlage angepasst wird.

Durch das Herabfallen der Wassertropfen auf das heiße Granulat entsteht eine explosionsartige Wasserverdampfung, der Wasserdampf steigt hoch, fällt über die Kondensationsspirale nieder, wird kondensiert und überträgt die Kondensationswärme an das Heizmedium des Heizungskreislaufes. Der Wasserdampf ist leicht überhitzt, die Wärmeübergangszahlen bei der Kondensation liegen in der Größenordnung um 3.000 W/m²K und die inneren Wärmeübergangskoeffizienten lassen sich in der Heizspirale durch die passende Strömungsgeschwindigkeit auch auf die Größenordnung von 3.000 W/m²K hochbringen, so dass sich die Heizspirale mit relativ kleiner Heizfläche bemessen lässt.

Wenn das Granulat bis zu einer bestimmten Tiefe auf eine Temperatur unter 100°C abgekühlt ist, fließt das Wasser über die Oberfläche des Granulats bis zu der Tiefe, bei der die Temperatur des Granulats über 100°C liegt, dann setzt der Verdampfungsprozess ein und der Wasserdampf strömt wieder zum Kondensator. Der Verdampfungsvorgang dauert so lange, bis sich das letzte Korn in der Schüttung unter 100°C abkühlt.

Im Nachfolgenden wird an einem Beispiel gezeigt, mit welchen Größen für einen Haushalt von ca. 200 m² Fläche zu rechnen ist, wenn die Variante mit den Heizblöcken aus Schamott in Betracht gezogen wird:
- Für die Beheizung einer Wohnanlage von 200 m² wird die Wärmeleistung von ca. 24 kW maximale Leistung (für -15°C Außentemperatur) benötigt, je nach dem wie das Objekt isoliert ist (es wird im Durchschnitt mit 120 W/m² gerechnet)
- die mittlere spezifische Wärmekapazität des Schamotts (für eine mittlere Temperatur der Schamottblöcke zwischen 100 und 900°C) beträgt: Cp=1,26 kJ/kgK
- die Dichte des Schamottes beträgt p=2.000 kg/m³
- die mittlere Wärmeleitfähigkeit des Schamottes beträgt 0,8 W/mK
- der durchschnittliche, stündliche Energieverbrauch beträgt innerhalb der Heizperiode 15 KW (es wird gerechnet mit ca. 1.800 h im Jahr)
- mit 16 Stunden täglich eingeschalteter Heizung, wird die tägliche Wärmemenge von 240 KWh benötigt.
- Die Speicherkapazität für 1 kg Schamottstein auf 900°C beträgt 1.008 kJ/kg.

Die erforderliche Speichermasse für 240 kWh beträgt 860 kg und beträgt auf das Volumen bezogen 0.43 m³. Wenn ein Speicherelement die Abmessungen 200x200x1.000 mm hat, werden 12 Wärmespeicherblöcke benötigt. Dies ergibt einen Wärmespeicherkessel mit 3x4 Wärmespeichereinheiten, mit den Außenabmessungen 600x800 mm und der Höhe von ca. 1.500 mm.

Geht man von der Voraussetzung aus, dass der Nachtstrom abends von 22 h bis morgens 6 h eingeschaltet ist, ergibt sich ein elektrischer Anschluss von 30 kW, um 240 kWh täglich speichern zu können. Für diesen Wärmespeicherkessel werden 10 Heizstäbe mit der jeweiligen Leistung von 3 kW benötigt.

Kurzbeschreibung der Zeichnung, in der zeigen:
- Figur 1: eine Prinzipskizze des Wärmespeicherkessels zur Speicherung des Nachtstroms
- Figur 1A: zur Verdeutlichung der Figur 1 zwei um 90Grad gedrehte Ansichten eines Wärmespeicherblocks im Längsschnitt A-A der Figur 1 sowie einen Querschnitt durch den Wärmespeicherblock längs der Linie S-S und gemäß Detail B eine Draufsicht von oben auf den Wärmespeicherblock
- Figur 1B: einen Längsschnitt längs der Linie A-A in Figur 1
- Figur 1C: eine Draufsicht auf Figur 1 zur Darstellung eines ein Wärmetauschers
- Figur 1D: eine Draufsicht längs des Querschnitts B-B auf die Wärmespeicherblöcke
- Figur 1E: eine Draufsicht längs des Querschnitts C-C auf die Wärmespeicherblöcke in der Ebene von zwei Elektroheizstäben
- Figur 2: eine Prinzipskizze des erfindungsgemäßen Wärmespeicherkessels mit integriertem Gas- oder Ölbrenner
- Figur 2A: einen bezüglich der Figur 2 um 90Grad gedrehten Längsschnitt längs der Linie A-A in Figur 2
- Figur 2B: zur Verdeutlichung der Figur 2 zwei um 90Grad gedrehte Ansichten eines Wärmespeicherblocks
- Figur 2C: zur Verdeutlichung der Figur 2 eine Draufsicht von oben auf den Wärmetauscher
- Figur 2D: zur Verdeutlichung der Figur 2 eine Draufsicht auf die Wärmespeicherblöcke längs der Linie B-B in Figur 2
- Figur 2E: zur Verdeutlichung der Figur 2 eine Draufsicht auf die Wärmespeicherblöcke längs der Linie C-C in Figur 2
- Figur 2F: zur Verdeutlichung der Figur 2 eine Draufsicht auf die Wärmespeicherblöcke längs der Linie D-D in Figur 2
- Figur 3: eine erfindungsgemäße Prinzipskizze des Wärmespeicherkessels zum Speichern der Energie aus der Biomasse, festen, gasförmigen und flüssigen Brennstoffen. Wärmeübertragungsmedium ist Heizwasser
- Figur 3A: eine schematische Darstellung der Armierung eines Wärmespeicherblocks
- Figur 3B: eine Draufsicht des Wärmespeicherkessels
- Figur 3C: eine schematische Darstellung des Abhitzekanals zum Wärmeentzug der Rauchgase
- Figur 3D: eine schematische Darstellung der Anbindung des Wärmespeicherkessels an einem Abhitzekanal
- Figur 3E: eine schematische Darstellung der Anbindung des Wärmespeicherkessels an einem Abhitzekessel
- Figur 4:: eine erfindungsgemäße Prinzipskizze des Wärmespeicherkessels zum Speichern der Energie aus der Biomasse fester, gasförmiger und flüssiger Brennstoffe; das Wärmeübertragungsmedium ist Warmluft
- Figur 4A: eine Draufsicht des Wärmespeicherkessels zur Warmlufterzeugung
- Figur 4B: eine schematische Darstellung des Abhitzekanals zum Wärmeentzug der Rauchgase
- Figur 4C: eine schematische Darstellung der Anbindung des Wärmespeicherkessels zur Warmlufterzeugung an die Abhitzekanäle
- Figur 5: eine erfindungsgemäße Prinzipskizze des Wärmespeicherkessels zur Dampferzeugung aus gespeicherter Wind- und Sonnenenergie
- Figur 5A: eine Draufsicht des Wärmespeicherkessels zur Dampferzeugung
- Figur 5B: eine schematische Darstellung der Anbindung des Wärmespeicherkessels an die Anlage zur Stromerzeugung
- Figur 5C: eine schematische Darstellung der Armierung der Wärmespeicherblöcke mit integrierten elektrischen Heizstäben
- Figur 5D: eine schematische Darstellung der Stromerzeugung mittels des Wärmespeicherkessels mit integrierter Windanlage und Solaranlage und
- Figur 6: eine weitere schematische Darstellung der Stromerzeugung mittels eines Kreislaufs mit einem Zweistoffgemisch, Ammoniak/Wasser, und einem Verdampfer mit einer Mischung aus NH₃ und H₂O.

### Wege zur Ausführung der Erfindung:

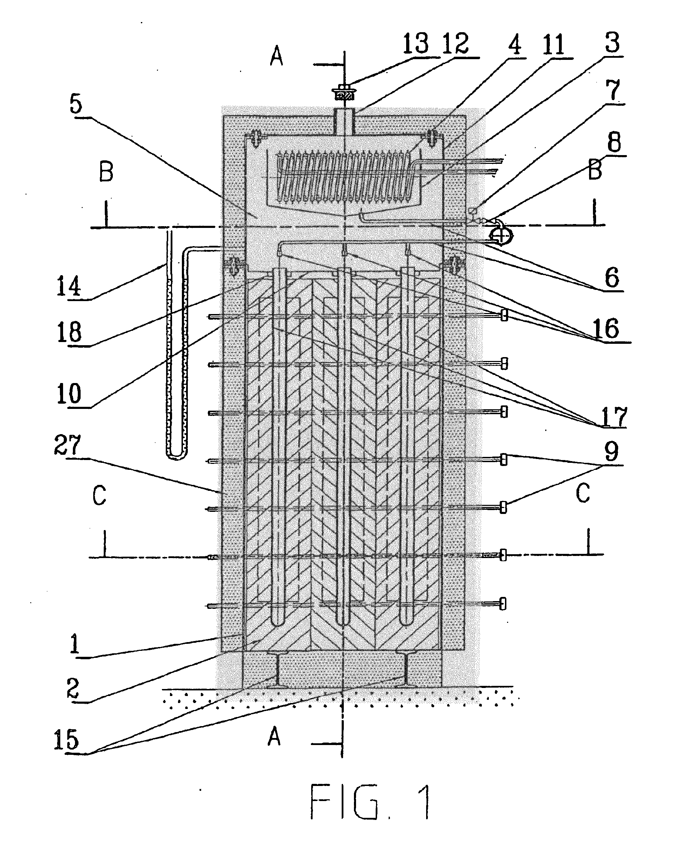

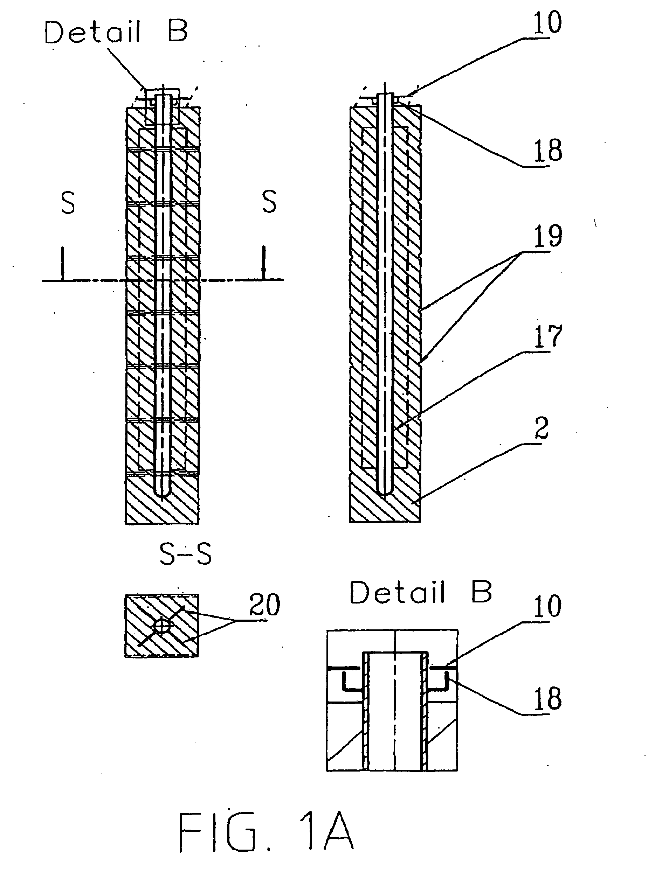

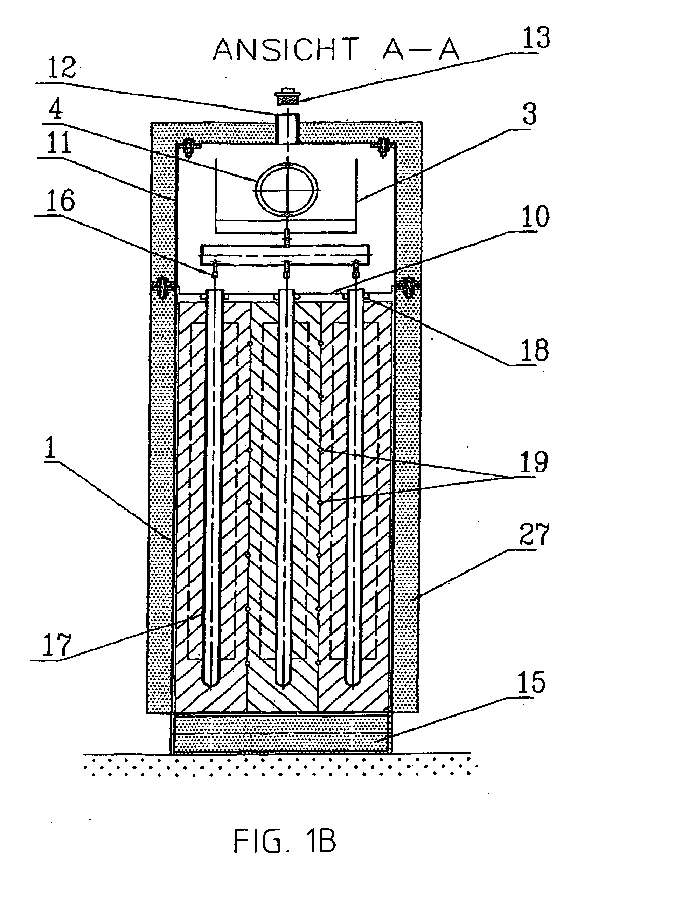

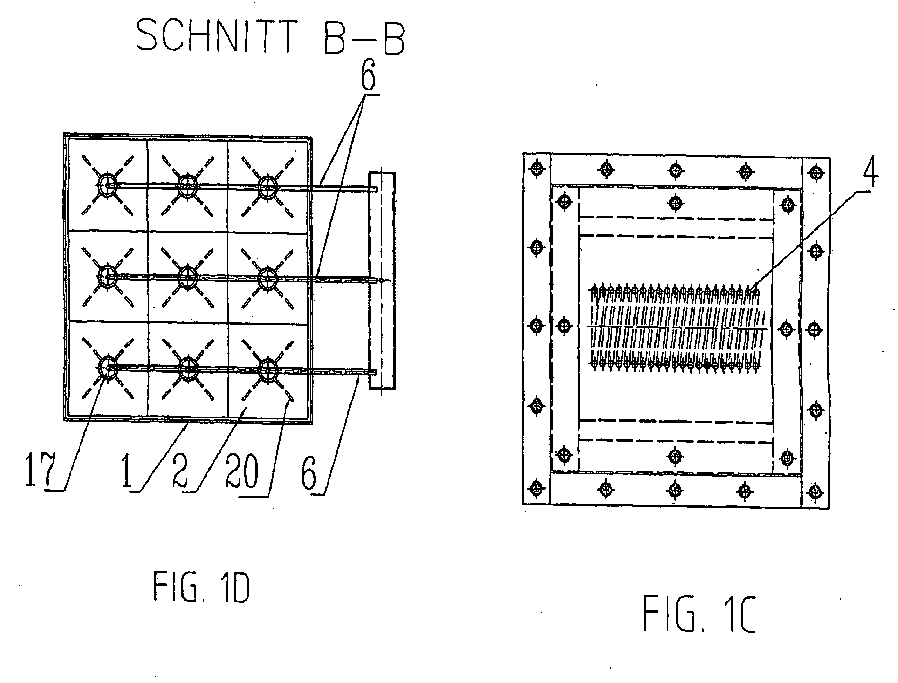

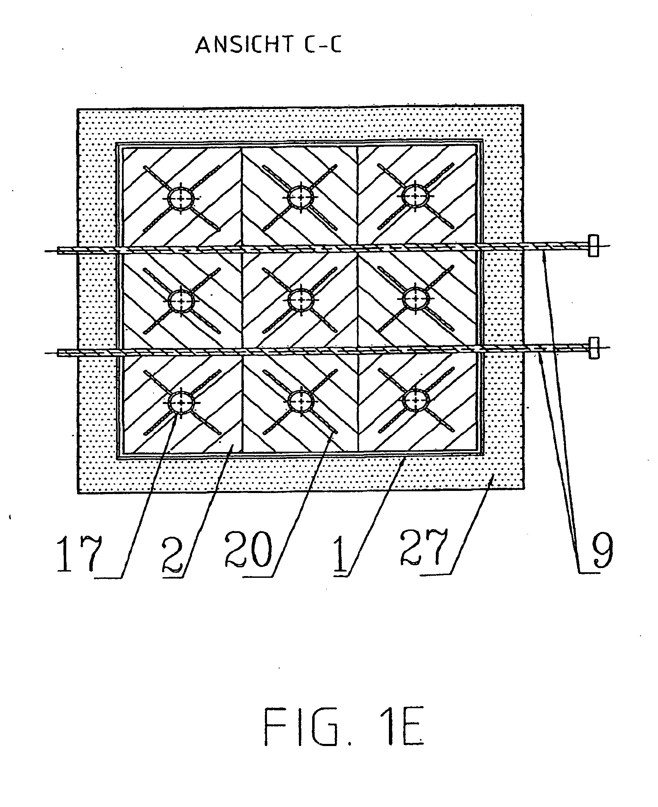

Ein Wärmespeicherkessel gemäß der Figur 1 ist ein rechtwinkliger bzw. quaderförmiger Behälter 1, der mit Wärmespeicherblöcken 2, in Form von Quadern, befüllt ist, dergestalt, dass die Wärmespeicherblöcke nebeneinander gestellt sind und praktisch den ganzen Innenraum des Behälters 1 ausfüllen. Die Wärmespeicherblöcke 2 bilden eine Wärmespeichermasse, wobei der Behälter 1 mit einer Wärmedämmung isoliert ist.

Oberhalb der Wärmespeicherblöcke 2 ist ein Kondensatsammelbehälter 3 vorgesehen, in den ein Wärmetauscher 4 eingebaut ist. Die Verbindung zwischen dem Kondensatsammelbehälter 3 und einem Dampfraum 5, in dem sich der Kondensatsammelbehälter 3 und der Wärmetauscher 4 befinden, erfolgt mittels Rohrleitungen 6. Ein Magnetventil 7 und ein nachfolgendes Nadelventil 8, die in den Rohrleitungen 6 angeordnet sind, dienen zur Regelung der Wärmeleistung; das Nadelventil 8 dient zur Feineinregelung des Kondensatdurchflusses durch die Rohrleitungen 6.

Mittels Elektroheizstäbe 9 wird mit elektrischem Strom die Wärmespeichermasse aufgewärmt, wobei die Elektroheizstäbe 9 vorzugsweise die Wärmespeichermasse waagrecht durchdringen. Eine Trennplatte 10, die aus rostfreiem Stahl angefertigt ist, dient zum Trennen des Wärmespeicherraumes vom darüber befindlichen Dampfraum 5, um die Befeuchtung der Wärmespeichermasse zu verhindern, die somit dampf- und wasserdicht abgeschottet ist. Der Dampfraum 5 ist mittels einer Deckhaube 11 luftdicht verschlossen, auf der im oberen Bereich eine Revisionsöffnung 12 vorgesehen ist. Eine Verschlussschraube 13 zum Verschließen der Revisionsöffnung 12 dient bei der ersten Inbetriebnahme des Wärmespeichers oder Wärmespeicherkessels der Kontrolle der Dampfbildung.

Der Dampfraum 5 ist mittels eines U-Rohres 14, in Form von vertikal stehenden, kommunizierenden Röhren, mit der Atmosphäre verbunden. Das U-Rohr 14 ist mit Wasser gefüllt, wobei die Wassersäule im U-Rohr 14 die Dichtigkeit des Dampfraumes 5 sichert. Der Behälter 1 des Wärmespeichers ist auf Trägerprofilen 15 aufgestellt, der Raum zwischen dem Behälter 1 und dem Boden ist mit einem Wärmedämmstoff isoliert.

Die Trägerprofile 15 dienen dazu, die heiße Wärmespeichermasse in einem bestimmten Abstand zum Boden zu halten, wodurch verhindert wird, dass sich Wärmebrücken bilden und der Boden beschädigt wird.

### Das Funktionsprinzip des Allzweckwärmespeichers:

Beim Starten des Allzweckwärmespeichers werden die elektrischen Heizstäbe 9 eingeschaltet und erhitzt, bis die Wärmespeichermasse der Wärmespeicherblöcke 2 eine Temperatur von 800 bis 900°C erreicht hat. Ein Thermostat kontrolliert die Aufheiztemperatur der Wärmespeichermasse und schaltet die Heizstäbe 9 mit Erreichen der vorgegebenen Temperatur aus. Zuvor ist der Kondensatsammelbehälter 3 mit einem Inhalt von 5 bis 10 Litern destilliertem Wasser befüllt worden.

Bei Energiebedarf öffnet das Magnetventil 7 und das Wasser im Kondensatsammelbehälter 3 fließt über das Nadelventil 8, das vorzugsweise vorher auf den maximalen Durchfluss justiert ist, durch die Rohrleitungen 6 und Düsen 16, welche an den Rohrleitungen 6 direkt oberhalb von Öffnungen von Verteiler- oder Verdampfungsrohren 17 angeordnet sind. Die Verteilerrohre 17 verlaufen innerhalb der einzelnen Wärmespeicherblöcke 2 und sind an ihren unteren Enden verschlossen.

Die Düsen 16 an den Rohrleitungen 6 sind so eingestellt, dass die aus ihnen austretende Kondensatmenge eine gleichmäßige Verteilung des Kondensates auf die einzelnen Verdampfungsrohre 17 sichert. Wenn das Kondensat, dessen Temperatur beim stationären Betrieb um 100°C beträgt, auf die Innenfläche der heißen Verdampfungsrohre 17 tropft, verdampft es schlagartig, verlässt das Verdampfungsrohre 17 als Dampf und wird anschließend im Wärmetauscher 4 wieder kondensiert, wobei der Dampf seine Wärme an das Heizungswasser abgibt, das durch den Wärmetauscher strömt. Dieser Vorgang wiederholt sich.

Gemäß Figur 1A ist ein Segment eines Wärmespeicherblocks 2 der Wärmespeichermasse dargestellt, in den das Verdampfungsrohr 17, vorzugsweise vertikal stehend, eingegossen ist. Am Verdampfungsrohr 17 sind Rippen 20 angeschweißt, um die Wärmeleitung von der Wärmespeichermasse zur Rohrwand des Verdampfungsrohres 17 zu erhöhen. Am oben gelegenen Austritt des Verdampfungsrohres 17 aus dem Segment des Wärmespeicherblocks 2 ist eine Wasserauffangschale 18 mit dem Verdampfungsrohr 17 wasserdicht verbunden, z.B. verschweißt. Falls es zu einer unerwünschten Wasserkondensation im Dampfraum 5 kommen sollte, wird das Kondensat von den Wasserauffangschalen 18 aufgefangen, wobei es durch die Wärmeabstrahlung der Wärmespeichermasse wieder verdampft.

Die Wasserauffangschalen 18 dienen als Puffer für eine eventuelle Wasserbildung im Verdampfungsraum 5. Seitlich an den Segmenten eines Wärmespeicherblocks 2 der Wärmespeichermasse sind Kanäle oder Nuten 19 eingegossen, die dazu dienen, die Heizstäbe 9 einzubetten. Wenn zwei Wärmespeicherblöcke 2 nebeneinander aufgestellt sind, bilden die Kanäle 19 zweier benachbarter Wärmespeicherblöcke 2 jeweils Kreisquerschnitte zur Aufnahme der Heizstäbe 9.

Die Figuren 1B, 1C, 1D und 1E dienen zur Verdeutlichung der Figur 1.

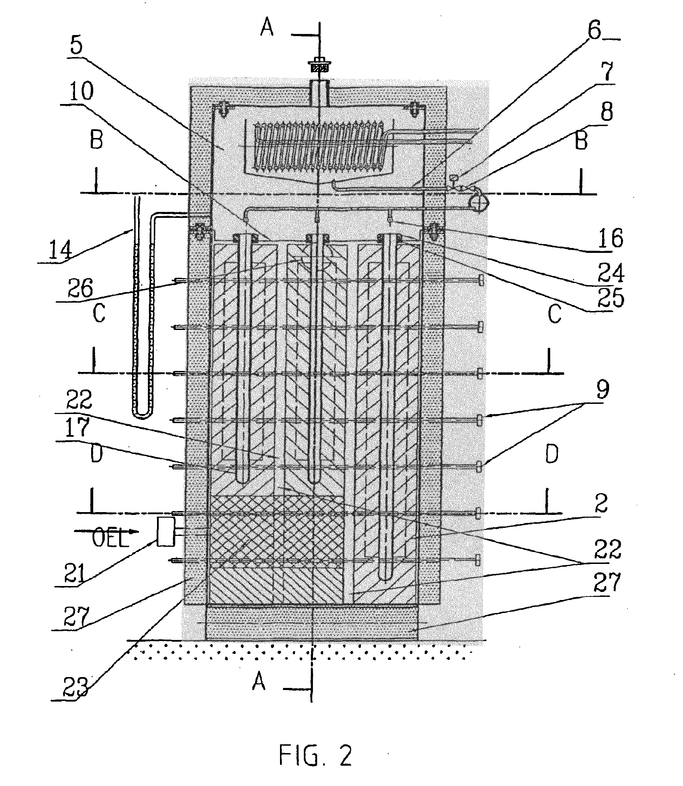

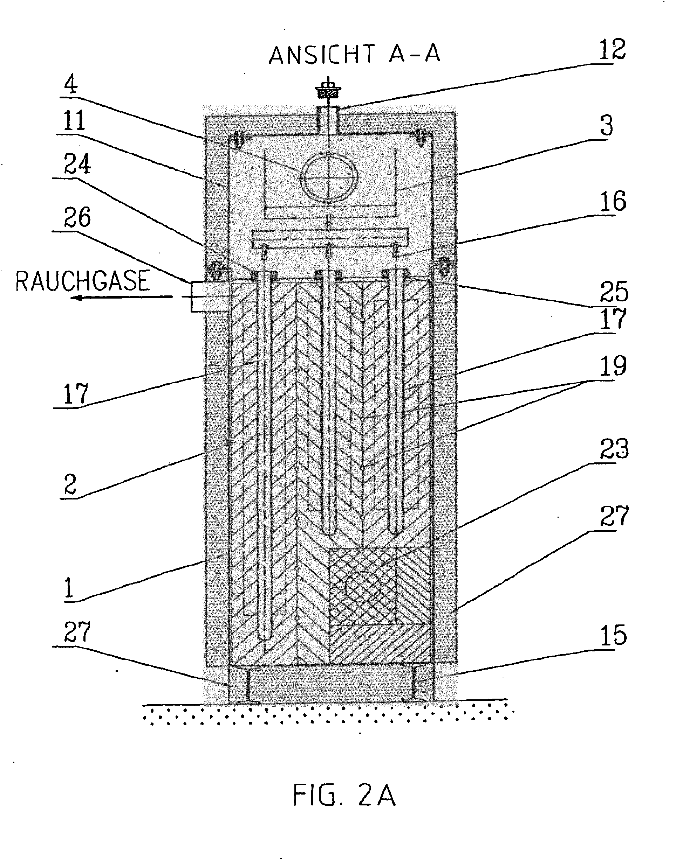

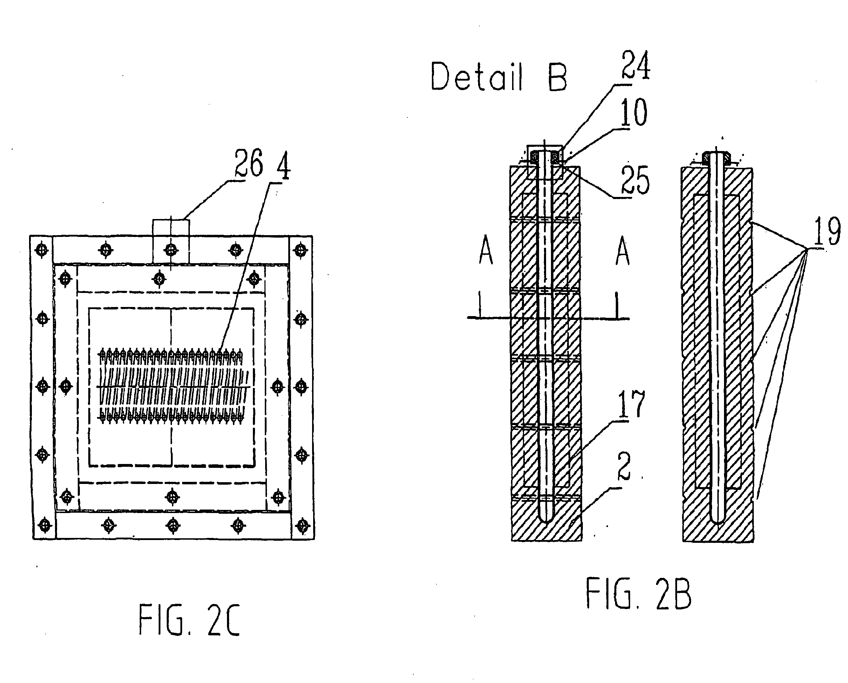

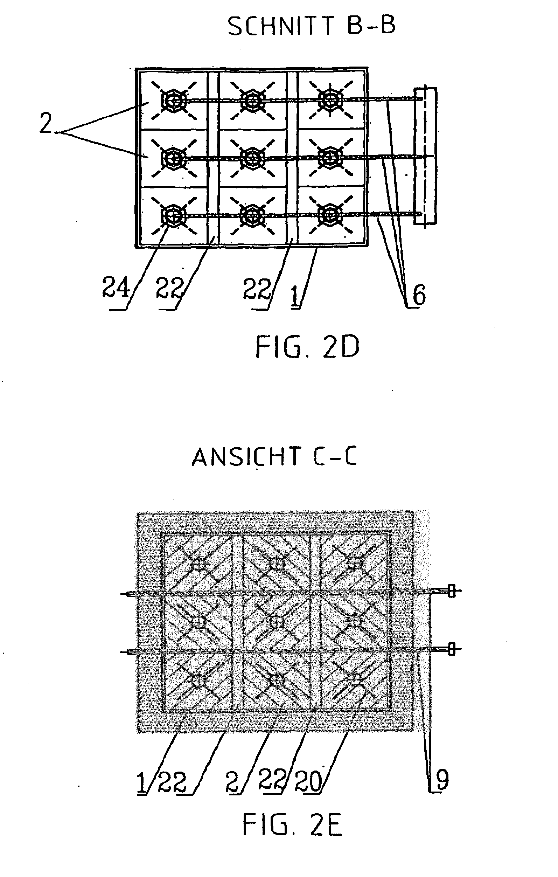

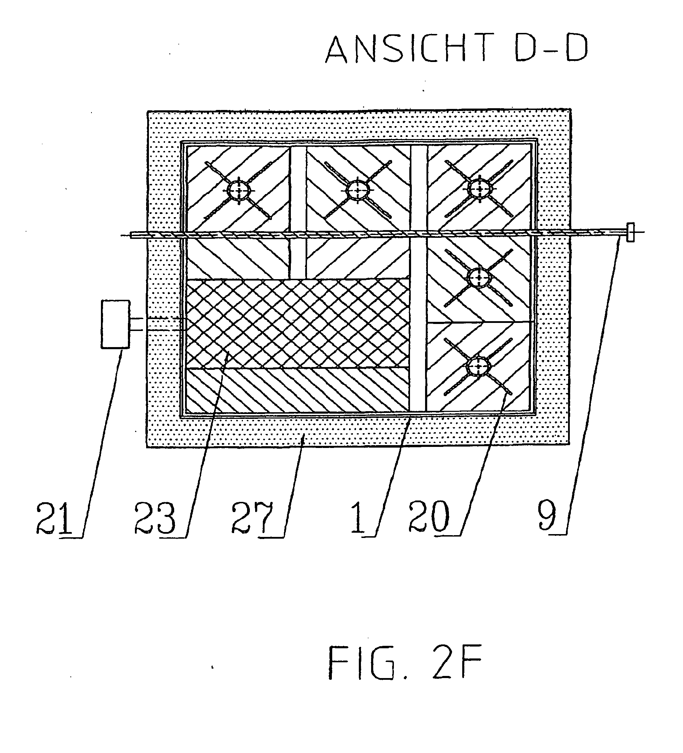

Gemäß der Figur 2 ist die Möglichkeit vorgesehen, in den Behälter 1 mit den Wärmespeicherblöcken 2 der Wärmespeichermasse einen Öl- oder Gasbrenner 21 einzubauen, um Öl- oder Gasenergie speichern zu können. Der Unterschied zu Figur 1 besteht darin, dass die Wärmespeicherblöcke 2 in einem bestimmten Abstand, Strecke s, voneinander gestellt werden, wobei diese Abstände der Strecke s der Wärmespeicherblöcke voneinander Rauchgaskanäle 22 bilden.

Es ist zusätzlich ein leeres Volumen, nämlich ohne Wärmespeichermasse, vorgesehen, das als Brennraum 23 des Öl- oder Gasbrenners 21 dient. Charakteristisch für diese Ausführung ist auch, dass der Dampfraum 5 vom Wärmespeicherraum gasdicht getrennt ist. Die Trennung der beiden Räume erfolgt dergestalt, dass die Verdampfungsrohre 17 am Austritt mit einem Gewindeanschluss versehen sind, wobei das Trennblech 10 und die Verdampfungsrohre 17 gasdicht miteinander verbunden sind, zum Beispiel mittels einer Mutter 24 mit Dichtung 25. Die Rauchgase strömen aus der Brennkammer 23 über die Rauchgaskanäle 22, 63 und verlassen den Wärmespeicherkessel durch ein Rauchgasrohr 26.

Die Nutzung der gespeicherten Wärme erfolgt auf gleiche Weise wie im Falle der Figur 1 beschrieben ist. Der Wärmespeicherkessel ist ebenfalls mit Mineralwolle 27 isoliert.

Die Figuren 2A, 2B, 2C, 2D, 2E und 2F dient zur Verdeutlichung der Figur 2 und sind den Figuren 1B, 1C, 1D und 1E vergleichbar.

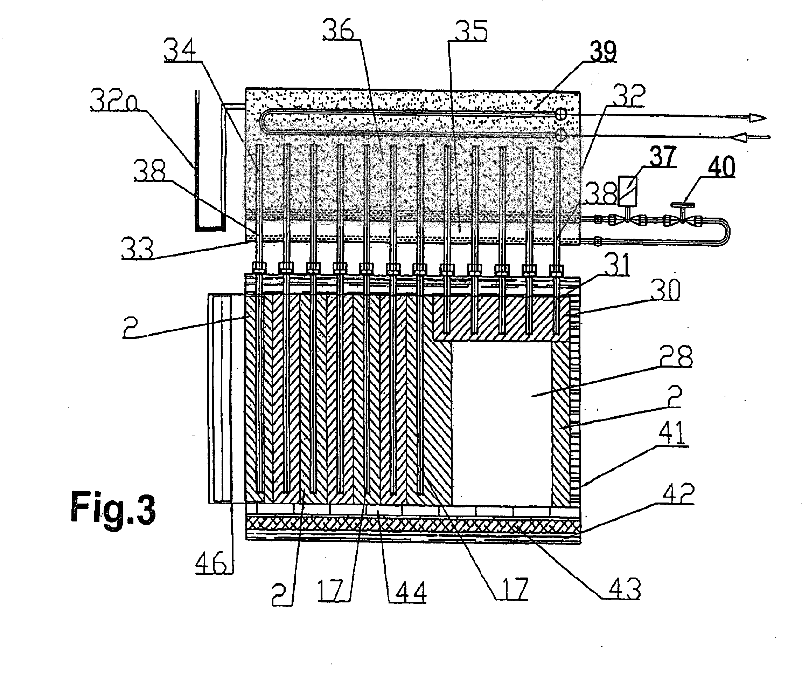

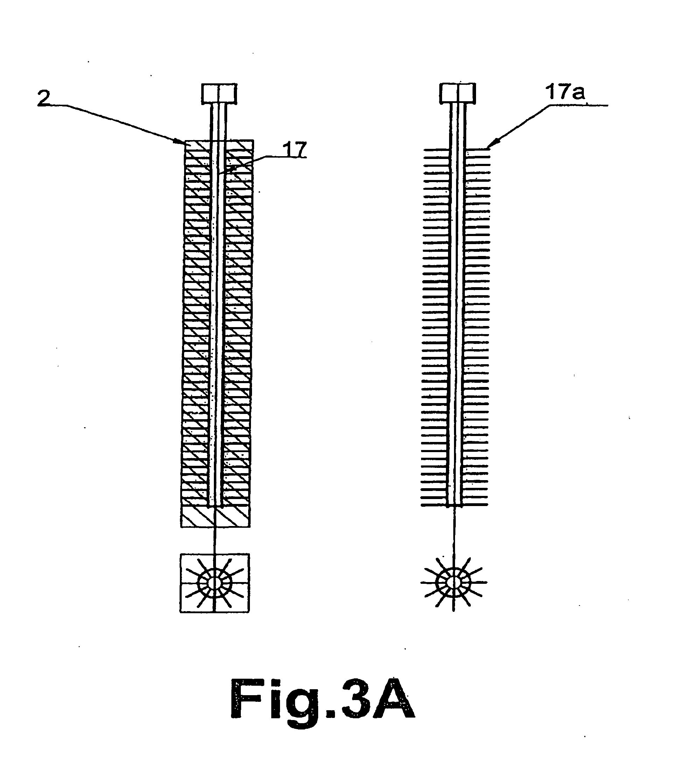

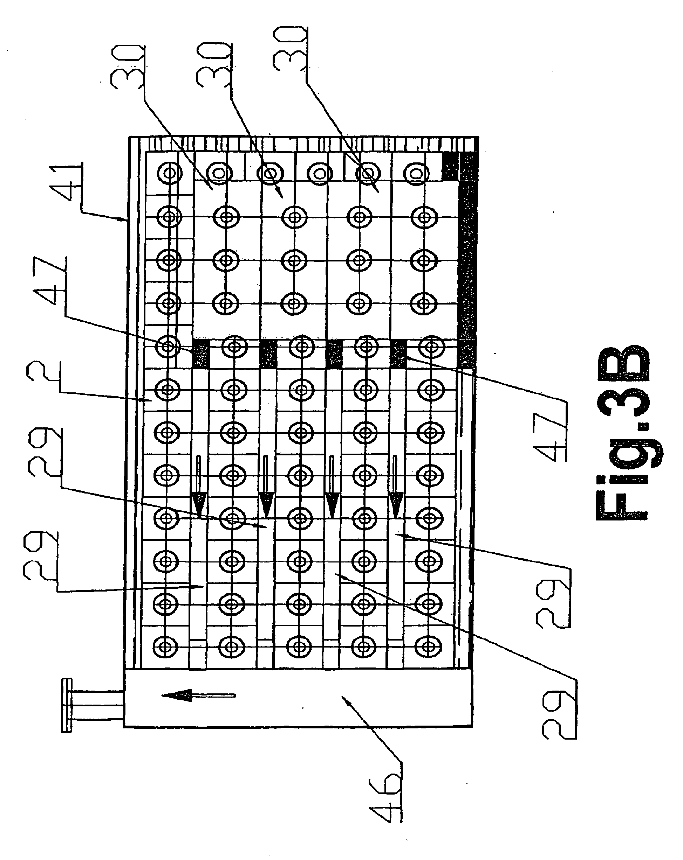

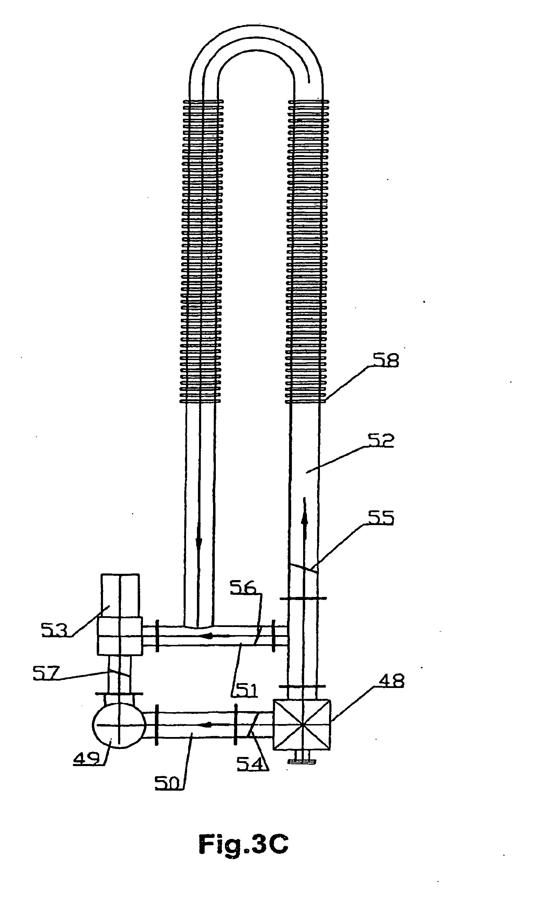

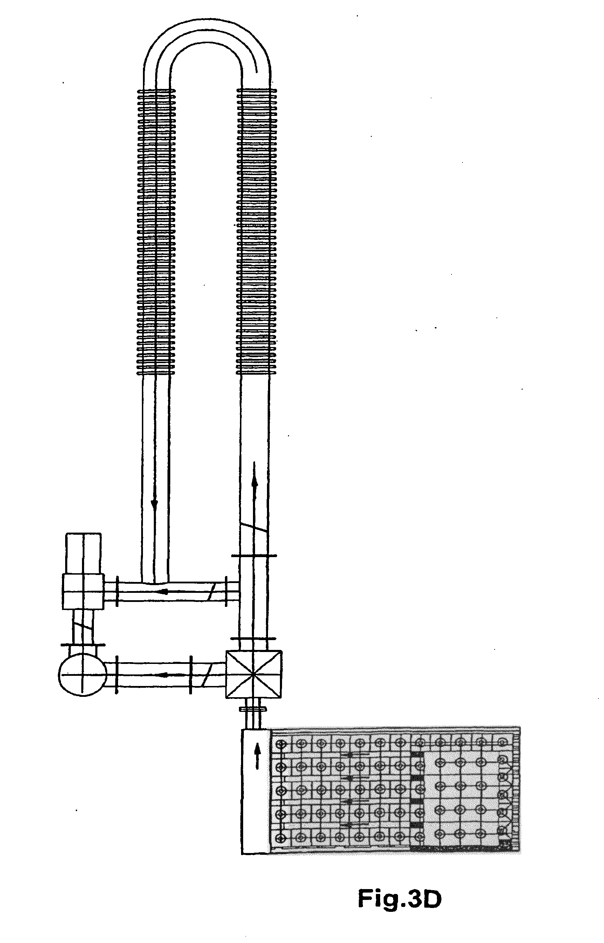

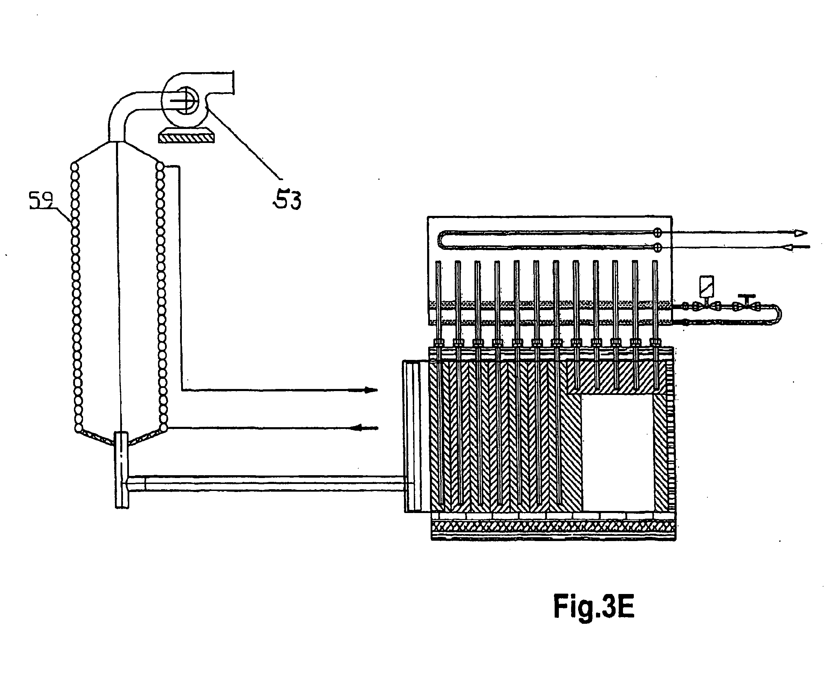

Gemäß der Figur 3 ist die Möglichkeit gegeben, den Wärmespeicherkessel mit einem festen Brennstoff oder mit Biomasse zu betreiben, wobei ein Feuerraum 28 dem Wärmespeicher vorgeschaltet ist und die Rauchgase nach der Verbrennung durch Rauchgaskanäle 29, Figur 3B, strömen, die in Strömungsrichtung mittels der Wärmespeicherblöcke 2 gebildet sind. Die Verbrennungsluft wird klassisch mit einer Regelklappe (nicht in Figur 3 dargestellt) geregelt. Die Regelklappe ist an der Feuerraumtür angebracht. Die Decke des Feuerraumes besteht aus Wärmespeicherblöcken 30, die aus feuerfester Masse gegossen sind und in der Verdampfungsrohre 31 eingegossen sind. Die Verdampfungsrohre 31 in der Decke des Feuerraumes sind dementsprechend kürzer als die Verdampfungsrohre 17 in den Wärmespeicherblöcken 2. Die Rauchgase werden aus den Rauchgaskanälen 29 in einen Rauchgassammelkanal 46 geleitet.

Oberhalb der Wärmespeicherblöcke 2 und 30 ist ein Behälter 32 aufgesetzt, durch dessen Boden 33 Rohrstücke 34 durchgezogen und mit dem Boden 33 wasserdicht verbunden, vorzugsweise verschweißt, sind. Die Rohrstücke 34 passieren eine Dosierkammer 35 und ragen in eine Dampfsammelkammer 36 hinein. Die Dosierkammer 35 dient als Speisekammer für das Kondensat, das in die Verdampfungsrohre 17 und 31 eindosiert wird. Bei einem Wärmebedarf öffnet sich ein Magnetventil 37 und das Kondensat fließt aus der Dampfsammelkammer 36 in die Dosierkammer 35 ein. Die Rohrstücke 34 weisen Öffnungen 38 bzw. Löcher 38 auf, durch welche das Kondensat in die Verdampfungsrohre 17 und 31 einfließt, an den Wandungen der Verdampfungsrohre 17 und 31 innen entlang nach unten gleitet, erwärmt wird und anschließend verdampft.

Der Dampf steigt durch die Verdampfungsrohre 17 und 31 hoch, gelangt an die Oberfläche eines Rohrwärmetauschers 39 und kondensiert dort. Das Kondensat sammelt sich am Boden 33 der Dampfsammelkammer 36; die weitere Prozedur wiederholt sich.

Ein Nadelventil 40 dient zur Feinregelung der Kondensatausflussmenge aus der Dampfsammelkammer 36. Das Niveau des Kondensats innerhalb der Dosierkammer 35 bestimmt die Wärmeleistung, natürlich unter der Voraussetzung, dass die gespeicherte Wärme in den Wärmespeicherblöcken 2 und 30 noch immer ausreicht, um das Kondensat verdampfen zu können.

Die Wärmespeicherblöcke 2 sind in einem Stahlgehäuse 41 untergebracht, in dem der Boden vorzugsweise schichtig mit einer Isolierschicht 42 aus Mineralwolle, mit einer Schicht aus Stahlbeton 43 und mit Ziegelsteinen 44 versehen ist. Am Behälter 32 ist als Sicherung gegen den Druckaufbau im Dampfsammelraum 36 ein teils mit Wasser gefülltes U-Rohr 32a vorgesehen, dessen Wassersäule dem herrschenden Dampfdruck in der Dampfkammer 36 standhält.

In Figur 3A ist der Wärmespeicherblock 2 mit dem Verdampfungsrohr 17 und mit einem Armierdraht 17a dargestellt. Damit ein guter Wärmekontakt zwischen dem Verdampfungsrohr 17 und der Wärmespeichermässe gesichert wird, sind die Armierungen 17a der Wärmespeichermasse mit dem Verdampfungsrohr 17 vorgesehen. Als Armierung dient ein Draht aus warmfestem Stahl dergestalt, dass der Draht am Verdampfungsrohr 17 und 31 angeschweißt ist.

In Figur 3B ist eine Draufsicht des Wärmespeicherkessels dargestellt, in dem die Anordnung der Wärmespeicherblöcke 2, der Rauchgaskanäle 29, des Rauchgassammelkanals 46 und der Deckbalken 30 des Feuerraums 28 zu sehen sind. Für den Einlauf der Rauchgase 47 in die Rauchgaskanäle 29 sind die Öffnungen dergestalt ausgeführt, dass die Einläufe bis zu einer bestimmten Höhe mit der feuerfesten Masse zugemauert sind, so dass als freier Querschnitt nur so viel frei bleibt, wie erforderlich ist, um die Rauchgasströmungsgeschwindigkeit in einem vorgegebenen Rahmen zu halten.

In Figur 3C sind ein Verteilerkanal 48, ein Schornstein 49, Bypass-Kanäle 50 und 51 und ein Rauchgasabhitzekanal 52 dargestellt.

Gemäß Figur 3C ist die Möglichkeit vorgesehen, dass die Rauchgase aus einem Wärmespeicherkessel 59, Figur 3E, über den Verteilerkanal 48 und den Bypass-Kanal 50 direkt in den Schornstein 49 geleitet werden. In diesem Falle wird ein Rauchgasgebläse 53 nicht eingeschaltet, eine Rauchgasklappe 54 ist in der Stellung "Auf" und weitere Rauchgasklappen 55, 56 und 57 sind in der Stellung "Zu" positioniert. Für den Fall, dass man eine höhere Wärmeleistung benötigt, wird das Rauchgasgebläse 53 eingeschaltet. In diesem Falle sind die Rauchgasklappen 54 und 55 in der Stellung "Zu" und die Rauchgasklappen 56 und 57 in der Stellung "Auf" positioniert. Die Rauchgase werden mittels des Rauchgasgebläses 53 in den Schornstein 49 geleitet.

Mittels des Rauchgasabhitzekanals 52 kann die Wärme der Rauchgase entkoppelt bzw. die Energie den Rauchgasen entzogen werden. In diesem Fall wird das Rauchgasgebläse 53 in Betrieb gesetzt, die Rauchgasklappen 54 und 56 befinden sich in Stellung "Zu", die Rauchgasklappen 55 und 57 sind in der Stellung "Auf" positioniert. Um die Wärmeabgabe der Rauchgase zu erhöhen, kann der Rauchgasabhitzekanal 52 zusätzlich mit Rippen 58 versehen sein.

In Figur 3D ist der Wärmespeicherkessel und die Rauchgasabhitzekanäle 52 integriert dargestellt. In Figur 3E ist eine weitere Möglichkeit dargestellt, dass anstatt der Rauchgasabhitzekanäle 52 ein Abhitzekessel dem Wärmespeicherkessel 59 nachgeschaltet ist, in dem die Energie der Rauchgase entkoppelt bzw. die Energie den Rauchgasen entzogen wird.

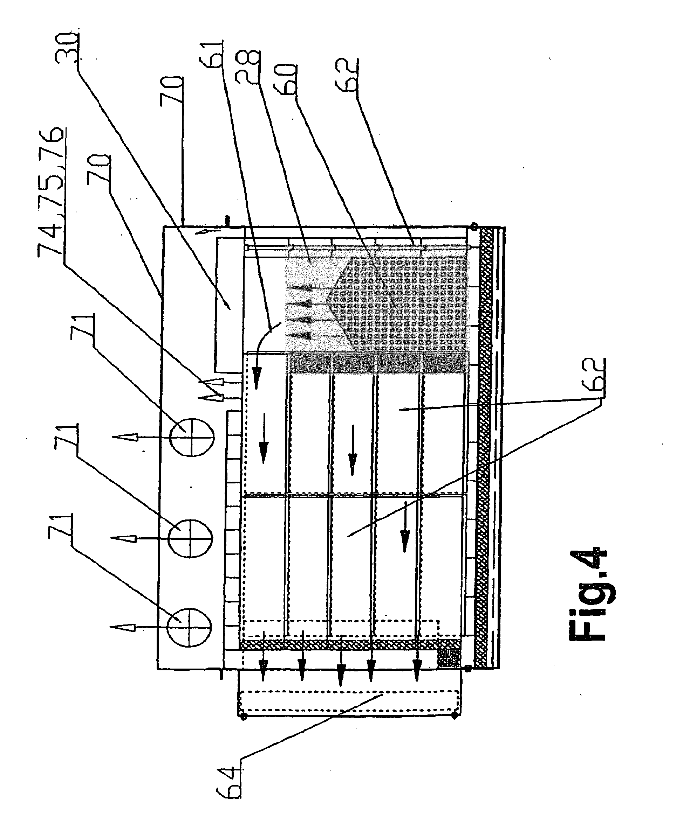

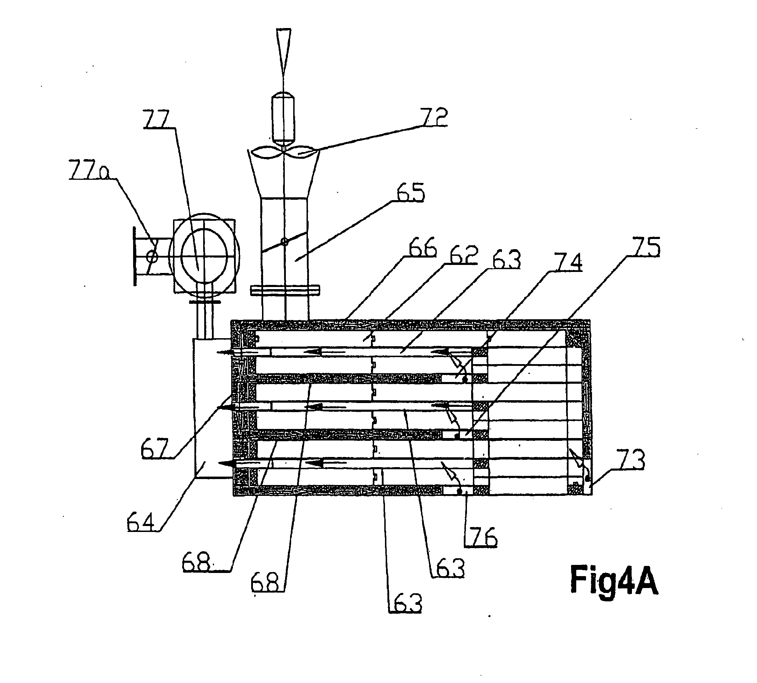

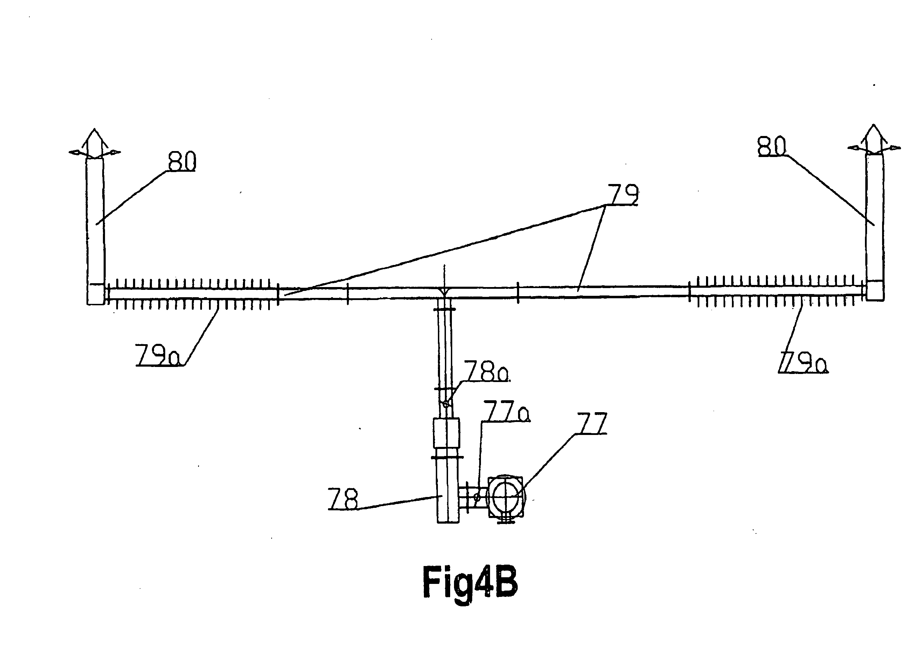

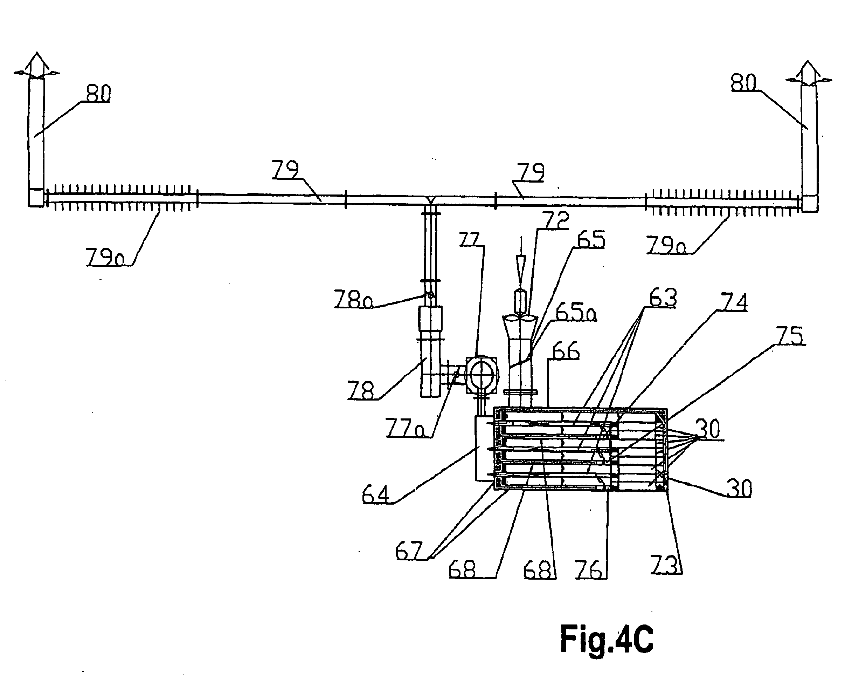

In den Figuren 4, 4A, 4B, 4C ist eine weitere Möglichkeit vorgesehen, den Wärmespeicherkessel mit Biomasse 60 zu befeuern und dabei, anstatt Warmwasser, warme Luft als Heizmedium zu erzeugen. Dies findet insbesondere Anwendung für die Heizung von Gewächshäusern, sowie für die Heizung von Werkshallen und anderen diversen Anwendungen in der Landwirtschaft und der Industrie.

Der Wärmespeicherkessel setzt sich aus Wärmespeicherblöcken 62 zusammen, die miteinander luftdicht mittels eines feuerfesten Mörtels verbunden sind. Die Wärmespeicherblöcke 62 bilden Rauchgaskanäle 63 für die Rauchgase 61, Figuren 4 und 4A. Die Rauchgase strömen durch die Rauchgaskanäle 63, geben dort ihre Wärme an die Wärmespeicherblöcke 62 ab und verlassen, wesentlich abgekühlt, den Wärmespeicherkessel durch einen Rauchgassammelkanal 64.

Mittels des Luftzuführungskanals 65 wird die Heizluft dem Wärmespeicherkessel zugeführt und anschließend wird der Luftstrom an Luftkanäle 66, 67 und 68 verteilt. Die Wärme fließt von den Wandungen der Wärmespeicherblöcke 62 an die Heizluft, dadurch erwärmt sie sich und anschließend verlässt sie die Luftkanäle 66, 67 und 68 durch Austrittsöffnungen 73, 74, 75 und 76. Die erwärmte Luft sammelt sich unter einer Warmluftsammelhaube 70 und von da aus wird sie anschließend in ein Heizobjekt mittels Verteilerleitungen 71 und mittels eines Gebläses 72 oder durch die Schwerkraftbewegung ins Heizobjekt verteilt. Die Rauchgase aus dem Wärmespeicherkessel können direkt in einen Schornstein 77 geleitet werden, in diesem Fall ist ein Rauchgasgebläse 78 außer Betrieb. Wenn die Rauchgasklappe 73a in der Stellung "Zu" und die Rauchgasklappe 78a in der Stellung "Auf" ist, strömen die Rauchgase durch einen Rauchgasabhitzekanal 79, in zwei Teile geteilt und geben dort ihre Wärme im Heizobjekt ab, werden dort abgekühlt und verlassen den Rauchgasabhitzekanal 79 nach außen hin durch Mini-Schornsteine 80. Um die Wärmeabgabe der Rauchgase zu beschleunigen, ist die Möglichkeit vorgesehen, die Rauchgasabhitzekanäle 79 mit Rippen 79a zu berippen, Figur 4B. Gemäß dieser Figur 4B sind separat die Rauchgasabhitzekanäle 79 mit dem Rauchgasgebläse 78, dem Schornstein 77 sowie den Mini-Schornsteine 80 dargestellt.

In Figur 4C ist die komplette Anlage zur Verdeutlichung des Zusammenwirkens dargestellt.

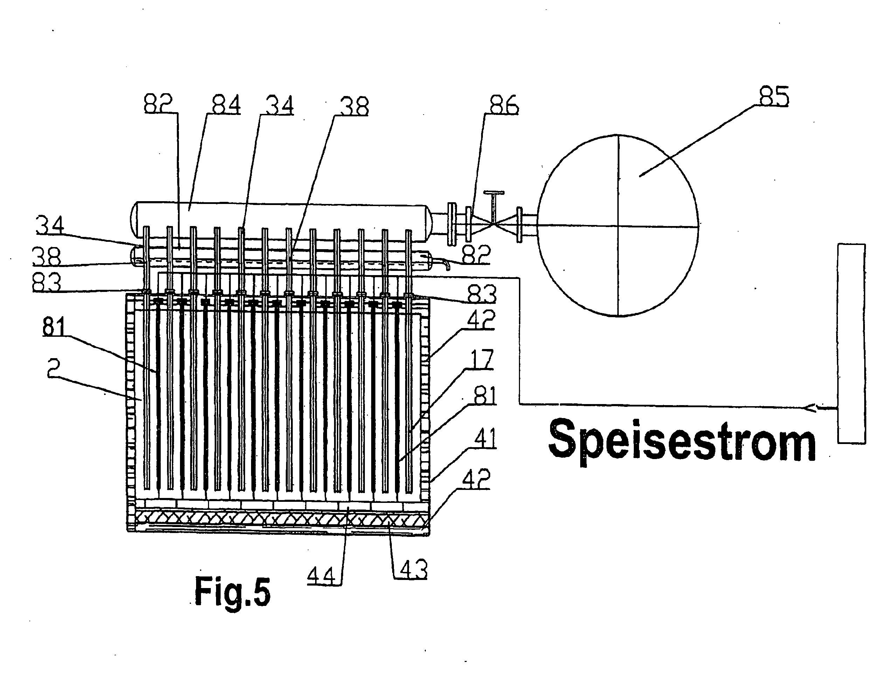

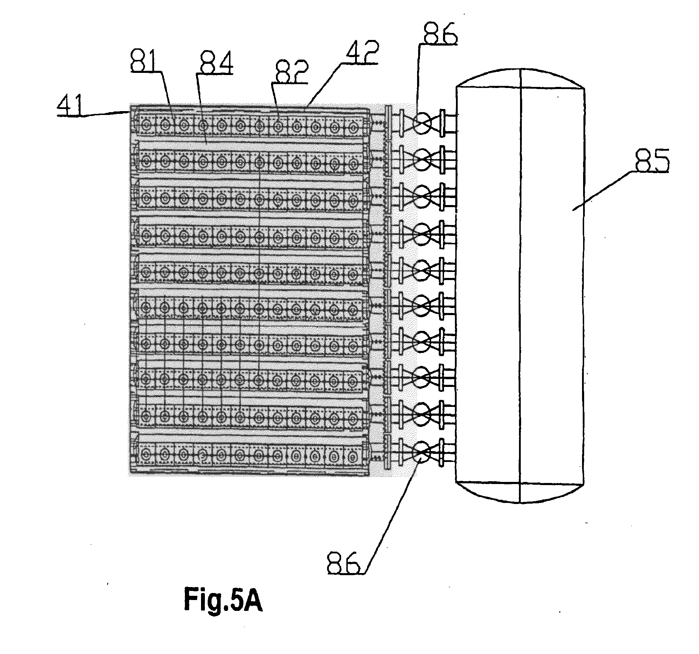

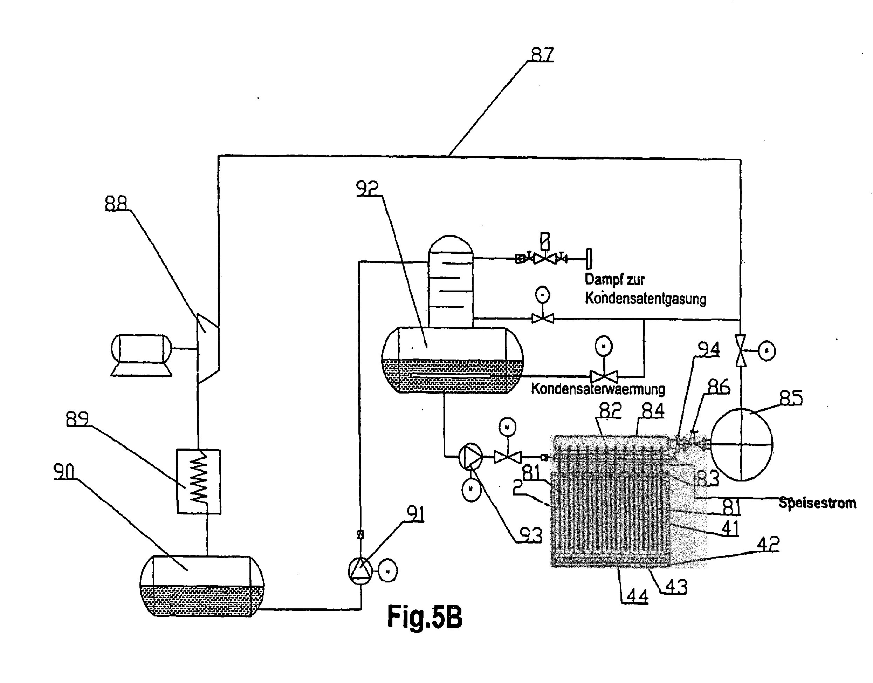

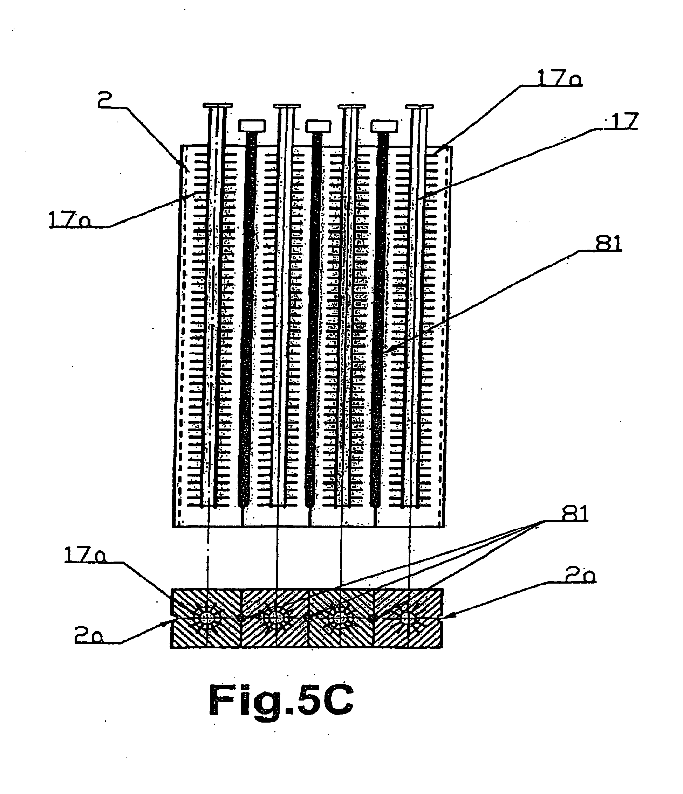

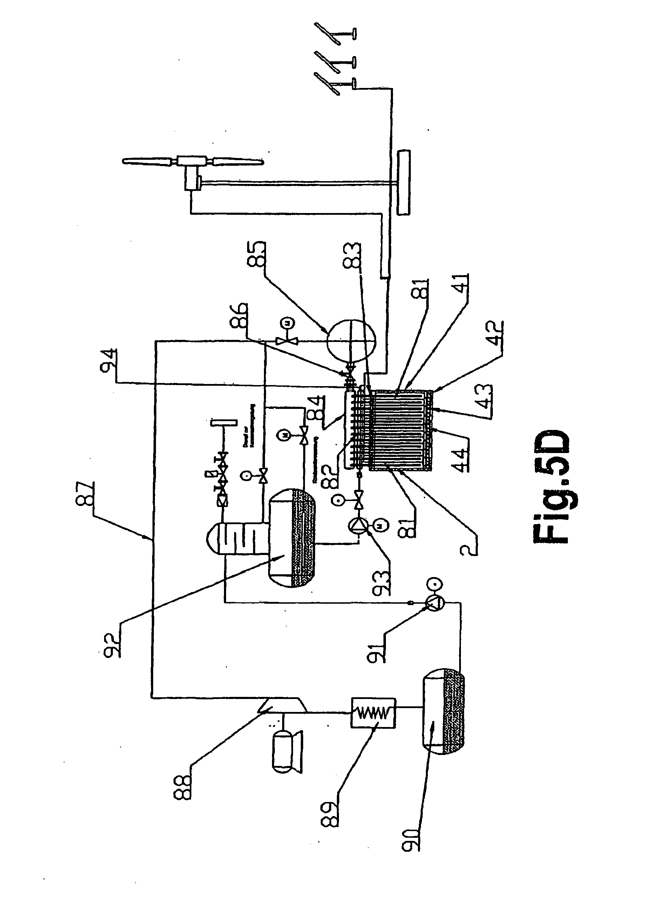

Gemäß Figur 5 ist die Ausführungsmöglichkeit gegeben, dass der Wärmespeicherkessel zur Speicherung von alternativen Energien, wie Windenergie und Sonnenenergie, genutzt werden kann. Für diesen Fall liegt die Lösung nah, aus der gespeicherten Energie Wasserdampf zu erzeugen, aus dem wiederum elektrischer Strom erzeugt werden kann. Um den Hochdruckdampf erzeugen zu können, wird es erforderlich sein, den Wärmespeicherkessel konstruktionsmäßig an die neuen Forderungen anzupassen. In Figur 5 ist schematisch ein Wärmespeicherkessel zur Wasserdampferzeugung dargestellt. Die Wärmespeicherblöcke 2 sind mit den Verdampfungsrohren 17 versehen. Zwischen den Wärmespeicherblöcken 2 sind elektrische Heizstäbe 81 vorgesehen, die aus einer externen Energiequelle mittels eines elektrischen Speisestromes die Wärmespeicherblöcke 2 auf eine Temperatur von 900°C bis 1.000°C aufwärmen. Die Wärmespeicherblöcke 2 sind nebeneinander so angeordnet, dass zwei Wärmespeicherblöcke 2 einen Heizstab 81 umschließen. Alle Wärmespeicherblöcke 2 sind mittels eines Rohrstückes 82, Kondensatdosierrohr, das auf beiden Seiten verschlossen ist, miteinander verbunden. Die Dampfausflussrohre 34 sind mit den Verdampfungsrohren 17 mittels Flanschverbindungen 83 luftdicht miteinander verbunden. Die Dampfausflussrohre 34 passieren das Kondensatdosierrohr 82 und ragen in das Dampfsammelrohr 84 hinein. Aus dem Kondensatdosierrohr 82 wird das Kondensat durch die an den Dampfausflussrohren 34 vorgesehenen Öffnungen 38 in die Verdampfungsrohre 17 eindosiert. Das Kondensat gleitet an den Wandungen des Verdampfungsrohres 17 hinab, erwärmt sich und verdampft anschließend. Der Wasserdampf steigt hoch und gelangt in das Dampfsammelrohr 84. Von da aus wird der Wasserdampf in einen Dampfsammelbehälter 85 geleitet. Jede Reihe der Wärmespeicherblöcke 2 ist einem Kondensatdosierrohr 82 und einem Dampfsammelrohr 84 zugeordnet.

Dies ist am besten in Figur 5A zu erkennen. In Figur 5A ist die Draufsicht der Anlage zur Dampferzeugung mittels des Wärmespeicherkessels dargestellt. Die Absperrventile 86 dienen zum Absperren der Sektionen der Wärmespeichermasse 2, die abgekühlt worden ist und nicht mehr die ausreichende Energie zur Dampferzeugung geben kann.

Während der Ausschaltzeit einer Sektion wird die Wärmeenergie erneut in die Wärmespeichermasse gespeichert. Die komplette Anlage ist in dem Gehäuse 41 aus Stahlblech untergebracht, und mittels Mineralwolle 42 wird die Wärmespeichermasse so isoliert, dass die Wärmeverluste auf Minimum gehalten werden.

In Figur 5B ist die Anbindung des Wärmespeicherkessels an die klassische Dampferzeugungsanlage dargestellt. Der Wasserdampf verlässt den Dampfsammelbehälter 85, wird mittels einer Dampfleitung 87 zu einer Wasserdampfturbine 88 geleitet, dort gibt er die Energie ab und verlässt die Turbine in Form der Dampfbrüden, die im Kondensator 89 kondensiert werden und anschließend in den Kondensatsammelbehälter 90 geleitet werden. Aus einem Kondensatsammelbehälter 90 wird das Kondensat mittels einer Kreiselpumpe 91 in einen Speisebehälter 92 geleitet und von da aus mittels einer Speisewasserpumpe 93 in das Kondensatdosierrohr 82 dosiert. Um das Wasserspiegelniveau in den Kondensatdosierrohren 82 aufrecht zu erhalten, sind die Kondensatdosierrohre 82 miteinander durch eine Rohrleitung 94 verbunden.

In Figur 5C ist der Wärmespeicherblock 2 mit den Verdampfungsrohren 17 mit dem Heizrohr 81 und dem Armierdraht 17a dargestellt. Damit ein guter Wärmekontakt zwischen dem Verdampfungsrohr 17 und der Wärmespeichermasse gesichert ist, sind die Armierungen 17a des Verdampfungsrohres 17 in der Wärmespeichermasse vorgesehen. Als Armierung ist der Draht aus warmfestem Stahl vorgesehen dergestalt, dass der Draht am Verdampfungsrohr 17 angeschweißt ist. Damit zwischen dem Wärmespeicherblock 2 und dem Heizrohr 81 (elektrisch) ein guter Wärmekontakt gesichert ist, sind an den Wärmespeicherblöcken 2 die Kanäle 2a vorgesehen, in denen das Heizrohr 81 eingebettet ist. Die Kanäle 2a werden beim Gussvorgang des Wärmespeicherblockes 2 geformt.

In Figur 5D ist integriert dargestellt der Wärmespeicherkessel und die Stromerzeugungsanlage, nämlich eine Windanlage und eine Solaranlage.

Durch die Kombination der Lösung gemäß Figur 3, nämlich die Wärmespeicheranlage, welche mit dem Feuerraum ausgestattet ist, in dem Biomasse verbrannt werden kann und diese Energie gespeichert wird, mit der Einbindung der Wind- und Solaranlage gemäß Figur 5D, erhält man eine allgemeine Lösung, die geeignet ist, sämtliche alternativen Energien in elektrische Energie umzusetzen.

Im Sinne dieser Erfindung ist auch, dass das vorgeschlagene neue Konzept es ermöglicht, aus der Windenergie, der Sonnenenergie und der Biomasse über das ganze Jahr Strom zu erzeugen.

Es stellt sich die Frage, wie hoch die Temperatur der Wärmespeichermasse getrieben werden soll. Technisch sinnvoll scheint eine Temperatur von 900°C bis 1.000°C zu sein. Dann stellt sich die Frage, bis zu welchen minimalen Temperaturen die Wärmespeichermasse abgekühlt werden soll. Die Analyse zeigt, dass es sinnvoll ist, mit einem Dampfdruck von 20 bar und einer Dampftemperatur von 350°C die Turbine zu betreiben. Die Expansion in der Turbine (adiabatisch angenommen) soll bis zu einem Enddruck von 0.5 bar erfolgen. Der Energieinhalt des Wasserdampfes bei 350°C und 20 bar beträgt 3.139 kJ/kg und am Ende der Expansion 2.400 kJ/kg. Daraus geht hervor, dass man eine Enthalpiedifferenz von 739 kJ/kg des Wasserdampfes erzielen könnte.

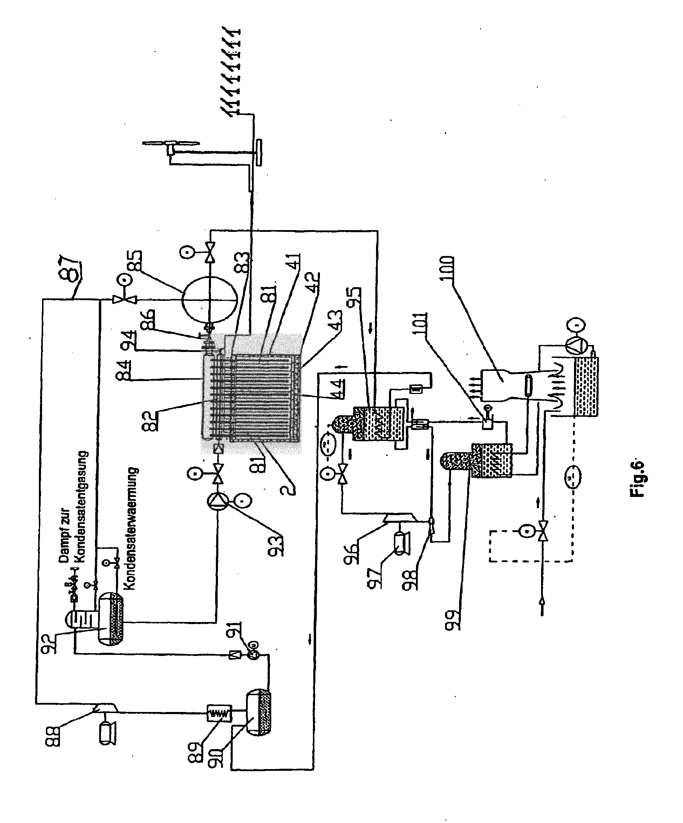

Um die gespeicherte Energie der Wärmespeichermasse auf ca. 150°C herabsetzen zu können, liegt es nahe, einen Kreisprozess mit einem Zweistoffgemisch zu verwenden. Als mögliche Lösung ist ein Zweistoffgemisch aus Ammoniak (NH₃) und Wasser (H₂O), im Verhältnis 50% zu 50% miteinander vermischt, denkbar. Diese Ausführungsmöglichkeit ist in Figur 6 dargestellt. Wenn die Wärmespeichermasse auf 350°C abgekühlt wird, dann schaltet sich der Kreislauf mit Zweistoffgemisch ein und es wird weiterer elektrischer Strom erzeugt.

Gemäß Figur 6 ist der Kreislauf mit einem Zweistoffgemisch (Ammoniak/Wasser) dargestellt. In einem Verdampfer 95 befindet sich eine Mischung NH₃ und H₂O. Das Ammoniak verdampft bei einem bestimmten Druck und einer bestimmten Temperatur. Der Ammoniakdampf wird in eine Turbine 96 geleitet und erzeugt mittels eines Stromgenerators 97 elektrischen Strom. Der Ammoniakdampf verlässt die Turbine 96 und wird anschließend mittels eines Ejektors 98 abgesaugt. Als Treibmedium für den Ejektor 98 dient ammoniakarmes Wasser aus dem Verdampfer 95.

Ammoniakdampf aus der Turbine 96 und ammoniakarmes Wasser werden mittels des Ejektors 98 in einen Absorber 99 geleitet, wo sich wieder eine flüssige Mischung zwischen Ammoniak und Wasser bildet. Während der Absorption muss der Mischung die Wärme abgeführt werden. Dies geschieht mittels eines Kühlturmes 100. Die Mischung wird mittels einer Kolbenpumpe 101 auf den Verdampferdruck gebracht und in den Verdampfer 95 eingeleitet. Durch das Einbeziehen des Zweistoffkreislaufes ist die Möglichkeit gegeben, die Wärmespeichermasse auf 150°C abzukühlen, womit die Speicherkapazität der Wärmespeichermasse wesentlich erhöht wird. Damit ergibt sich eine spezifische Speicherkapazität der Wärmespeichermasse von 740 kWh/m³ unter der Voraussetzung, dass die Wärmespeichermasse eine Dichte von 3.000 kg/m³, eine spezifische Wärmekapazität von 1.05 kJ/kgK besitzt und die Aufheiztemperatur 1.000°C beträgt.

### Beispielhaft sind die folgenden Möglichkeiten gegeben:

Eine Windanlage mit der nominellen Leistung von 20 MW im Durchschnitt für 6 Monate in 24 Stunden täglich, erzeugt elektrische Energie von 86.400 MWh. Geht man davon aus, dass die Wärmespeichermasse im Durchschnitt die Energie von 750 kWh/m³ speichern kann, ergibt sich, wie viel m³ Wärmespeichermasse erforderlich sind, um die binnen 180 Tagen erzeugte Energie zu speichern. Es ergibt sich, dass das Speichervolumen 115.200 m³ groß sein muss. Geht man davon aus, dass die Speichermasse eine Höhe von H=4 m hat, ergibt sich die erforderliche Grundfläche einer Energiespeicheranlage von 28.800 m² oder die Abmessungen von 170x170 m. Bei der Annahme, dass bei einem Kreisprozess der Wirkungsgrad bei der Stromerzeugung im Durchschnitt ca. 40% ist, beträgt die wiedergewonnene Leistung aus der Speicheranlage ca. 8 MW.

Daraus sieht man, dass die Speicheranlage dazu dienen soll, die Gleichmäßigkeit des Betriebes bei der Stromerzeugung aus der Windenergie zu sichern. Es ist sinnvoll, eine kleinere Leistung aus der Windanlage für die Speicherung vorzusehen, so dass bei windlosen Tagen die Speicheranlage eingeschaltet wird, um die Stromerzeugung über die Zeit konstant halten zu können.

Man kann unter Umständen im Winterbetrieb die Windenergie für Sommerbetrieb speichern, in diesem Fall kann die Windanlage den "schmutzigen" Strom erzeugen, d.h. ohne Frequenzregelung, weil der Strom in Wärmeenergie umgewandelt wird. In diesem Falle kann die Windanlage wesentlich billiger hergestellt werden und es sind keine besonders hohen technischen Forderungen gestellt.

Es wäre besonders wertvoll, wenn Solarenergie und Windenergie gekoppelt genutzt werden, die Stromerzeugung könnte aus der gespeicherten Energie, nur bei den windleeren Tagen oder bei sonnenleeren Tagen, wegen der Kontinuitätserhaltung des Betriebes genommen werden. Die Kombination von Windenergie, Sonnenenergie und der erfindungsgemäßen Wärmespeicheranlage gäbe zum ersten Male die Möglichkeit, die alternativen Energien in Kontinuität während des ganzen Jahres zu nutzen.

### Gewerbliche Anwendbarkeit:

Der Gegenstand der Erfindung ist insbesondere zur Energiespeicherung verschiedener Arten von Energie geeignet.

### Liste der Bezugszeichen:

- 1: Behälter
- 2: Wärmespeicherblöcke
- 2a: Kanäle
- 3: Kondensatsammelbehälter
- 4: Wärmetauscher
- 5: Dampfraum
- 6: Rohrleitungen
- 7: Magnetventil
- 8: Nadelventil
- 9: Elektroheizstäbe
- 10: Trennplatte
- 11: Deckhaube
- 12: Revisionsöffnung
- 13: Verschlussschraube
- 14: U-Rohr
- 15: Trägerprofile
- 16: Düsen
- 17: Verteiler- oder Verdampfungsrohre
- 17a: Armierdraht
- 18: Wasserauffangschale
- 19: Kanäle oder Nuten
- 20: Rippen
- 21: Öl- oder Gasbrenner
- 22, 63: Rauchgaskanäle
- 23: Brennraum
- 24: Mutter
- 25: Dichtung
- 26: Rauchgasrohr
- 27: isolierende Mineralwolle
- 28: Feuerraum
- 29: Rauchgaskanäle
- 30: Wärmespeicherblöcke bzw. Deckbalken
- 31: Verdampfungsrohre
- 32: Behälter
- 32a: U-Rohr
- 33: Boden
- 34: Rohrstücke bzw. Dampfausflussrohre
- 35: Dosierkammer
- 36: Dampfsammelkammer bzw. Dampfkammer
- 37: Magnetventil
- 38: Öffnungen oder Löcher
- 39: Rohrwärmetauscher
- 40: Nadelventil
- 41: Stahlgehäuse
- 42: Isolierschicht bzw. Mineralwolle
- 43: Stahlbeton
- 44: Ziegelsteine
- 46: Rauchgassammeikanal
- 47: Einlauf der Rauchgase
- 48: Verteilerkanal
- 49: Schornstein
- 50,51: Bypass-Kanäle
- 52: Rauchgasabhitzekanal
- 53: Rauchgasgebläse
- 54, 55, 56, 57: Rauchgasklappe
- 58: Rippen
- 59: Wärmespeicherkessel
- 60: Biomasse
- 61: Rauchgase
- 62: Wärmespeicherblöcke
- 63: Strömungs- oder Rauchgaskanäle
- 64: Rauchgassammelkanal
- 65: Luftzuführungskanal
- 66, 67, 68: Luftkanäle
- 70: Warmluftsammelhaube
- 71: Verteilerleitungen
- 72: Gebläse
- 73, 74, 75, 76: Austrittsöffnungen
- 73a: Rauchgasklappe
- 77: Schornstein
- 78: Rauchgasgebläse
- 78a: Rauchgasklappe
- 79: Rauchgasabhitzekanal
- 79a: Rippen
- 80: Mini-Schornsteine
- 81: elektrische Heizstäbe oder Heizrohre
- 82: Rohrstück bzw. Kondensatdosierrohr
- 83: Flanschverbindungen
- 84: Dampfsammelrohr
- 85: Dampfsammelbehälter
- 86: Absperrventile
- 87: Dampfleitung
- 88: Wasserdampfturbine
- 89: Kondensator
- 90: Kondensatsammelbehälter
- 91: Kreiselpumpe
- 92: Speisebehälter
- 93: Speisewasserpumpe
- 94: Rohrleitung
- 95: Verdampfer
- 96: Turbine
- 97: Stromgenerator
- 98: Ejektor
- 99: Absorber
- 100: Kühlturm
- 101: Kolbenpumpe

## Patentansprüche

1. Allzweckwärmespeicher zur Speicherung verschiedener Arten von Energie, wie erneuerbare Energie, Wind- oder Sonnenenergie, Nachtstrom sowie Stromenergie im Allgemeinen als auch Energie aus festen, gasförmigen und/oder flüssigen Brennstoffen, von Energie aus Biomasse sowie von Abfallwärme aus der Industrie, wobei die Energiespeicherung in Wärmespeicherblöcken (2, 30, 62) erfolgt, in denen durch die Energiespeicherung erhitzbare Verdampfungsrohre (17, 31) eingebettet sind, in die ein flüssiges Kondensat in vorgegebener Menge eintropft, wodurch sich in den Verdampferrohren (17, 31) Dampf bildet, dessen Wärmeinhalt für Heizzwecke oder Sekundärenergieerzeugung nutzbar ist, und wobei das Kondensat in einem Kreislauf geführt ist, **dadurch gekennzeichnet, dass** oberhalb der in den Wärmespeicherblöcken (2, 30, 62) angeordneten Verdampfungsrohre (17, 31) ein zweiteiliger, aus einem oberen ersten und einem unteren zweiten Teil bestehender Behälter (32) aufgesetzt ist, in welchem sich im oberen Teil, welcher als Dampfsammelkammer (36) ausgebildet ist, die Dampfbrüden bzw. das Dampfkondensat sammelbar sind, die anschließend mittels eines Wärmetauschers kondensierbar sind und mittels einer Absperreinrichtung (37, 40) in den unteren Teil, welcher als Dosierkammer (35) fungiert, des Behälters (32) einleitbar sind.

2. Wärmespeicher nach Anspruch 1, **dadurch gekennzeichnet,**
**dass** oberhalb der Verdampfungsrohre (17, 31) und in Koinzidenz mit denselben Rohrstücke (34) angeordnet sind, die mit den Verdampfungsrohren (17, 31) in Verbindung stehen und nach oben durch den Boden des Behälters (32) durch die Dosierkammer (35) hindurch geführt sind und in die Dampfsammelkammer (36) ragen, wobei die Rohrstücke (34) im Bereich der Dosierkammer (35) im Inneren derselben Öffnungen (38) aufweisen, durch die das Kondensat in die Verdampfungsrohre (17, 31) fließt und innerhalb derselben verdampft.

3. Wärmespeicher nach Anspruch 1 oder 2, **dadurch gekennzeichnet,**
**dass** die Verdampfungsrohre (17, 31) mit Stahldraht (17a) armiert sind oder an den Verdampfungsrohren (17, 31) Rippen (20) aus Stahlblech oder einem anderen Werkstoff angeschweißt sind zur Erzielung eines guten Wärmekontaktes zwischen den Verdampfungsrohren (17, 31) und der Wärmespeichermasse.

4. Wärmespeicher nach Anspruch 1, **dadurch gekennzeichnet,**
**dass** oberhalb der Verdampfungsrohre(17, 31) düsenförmige Regelelemente (6, 7, 8, 16) vorgesehen sind, welche das Kondensat gleichmäßig auf die Verdampfungsrohre (17, 31) verteilen.

5. Wärmespeicher nach einem der vorherigen Ansprüche,
**dadurch gekennzeichnet, dass** eine Reihe der Wärmespeicherblöcke (2, 30, 62) mittels eines Kondensatdosierrohres (82) sowie mittels eines Dampfsammelrohres (84) miteinander fest verbunden sind und eine feste Einheit bilden.

6. Wärmespeicher nach einem der vorherigen Ansprüche,
**dadurch gekennzeichnet, dass** am Behälter (32) als Sicherung gegen den Druckaufbau im Dampfsammelraum (36) ein teils mit Wasser gefülltes U-Rohr (32a), welches mit der Atmosphäre verbunden ist, vorgesehen ist, dessen Wassersäule dem herrschenden Dampfdruck in der Dampfkammer (36) standhält.

7. Wärmespeicher nach einem der vorherigen Ansprüche,
**dadurch gekennzeichnet, dass** innerhalb der Wärmespeicherblöcke (2, 30, 62) zur Energiespeicherung ein Brennraum (23) für den Aufsatz eines Gas- oder Ölbrenners (21) angeordnet ist, wobei die quaderförmigen Wärmespeicherblöcke (2, 30, 62) in einem bestimmtem Abstand (s) voneinander angeordnet sind zur Bildung von Rauchgaskanälen (22, 63), durch die die Rauchgase strömen und ihre Wärme an die Wärmespeichermasse abgeben.

8. Wärmespeicher nach einem der vorherigen Ansprüche,
**dadurch gekennzeichnet, dass** die in der Wärmespeichermasse gespeicherte Energie zur Lufterwärmung genutzt werden kann, wobei die Warmluft nach Erwärmung sich unter einer Warmluftsammelhaube (70) ansammelt und von da aus zu einem Heizobjekt verteilbar ist.

9. Wärmespeicher nach einem der vorherigen Ansprüche,
**dadurch gekennzeichnet, dass** Rauchgase und Warmluft mittels der Wärmespeichermasse luftdicht voneinander trennbar sind zur Vermeidung der Vermischung der beiden Gase, wobei der Verbrennungsvorgang im Wärmespeicher mittels des natürlichen Zuges, Schornstein (77), oder mittels eines Rauchgasgebläses (78) durchführbar ist.

10. Wärmespeicher nach einem der vorherigen Ansprüche,
**dadurch gekennzeichnet, dass** bei Speicherung der Energie aus festen, flüssigen oder gasförmigen Brennstoffen die Restenergie der Rauchgase nach dem Verlassen des Wärmespeichers in einen Rauchgasabhitzekanal (79) geleitet und zusätzlich abgekühlt wird zur Erhöhung des Wirkungsgrades des Wärmespeichers.

11. Wärmespeicher nach einem der vorherigen Ansprüche,
**dadurch gekennzeichnet, dass** zum Verbrennung von festen, gasförmigen und/oder flüssigen Brennstoffe innerhalb der Wärmespeicheranlage derselben ein Feuerungsraum (28) vorgeschaltet ist, welcher gegebenenfalls auch zur Speicherung der Wärmeenergie dient.

12. Wärmespeicher nach einem der vorherigen Ansprüche,
**dadurch gekennzeichnet, dass** zur Speicherung von Wind- und/oder Sonnenenergie die Wärmespeicherblöcke (2, 30, 62) Kanäle (19) aufweisen, in die je ein elektrischer Heizstab (9) eingebettet ist zur Aufheizung der Wärmespeicherblöcke (2, 30, 62) auf eine Temperatur von vorzugsweise zwischen 900°C bis 1.200°C.

13. Wärmespeicher nach Anspruch 5,
**dadurch gekennzeichnet, dass** die einzelnen Reihen der Wärmespeicheranlage, bestehend aus Wärmespeicherblöcken (2, 30, 62) mit Kondensatdosierrohr (82) und Dampfsammelrohr (84), an einen Dampfsammelbehälter (85) angeschlossen sind, wobei die Entnahme des Wasserdampfes für den Betrieb einer Wasserdampfturbine (88) aus dem Dampfsammelbehälter (85) erfolgt.

14. Wärmespeicher nach einem der vorherigen Ansprüche,
**dadurch gekennzeichnet, dass** neben einer Stromerzeugungsanlage mittels des Wasserdampfes ein Zweistoffkreislauf vorhanden ist, welcher den elektrischen Strom bei niedriger Temperatur und geringen Druck (900°C, 20 bar) des Arbeitsmediums zu erzeugen imstande ist.

15. Verwendung des Wärmespeichers nach einem der vorherigen Ansprüche, **dadurch gekennzeichnet, dass** die gespeicherte Wärme zur Erzeugung von Hochdruckdampf nutzbar ist, welcher anschließend zur Stromerzeugung verwendbar ist.

## Claims

1. All-purpose heat store for the storage of different types of energy, such as renewable energy, wind or solar energy, off-peak electricity as well as electrical energy in general, as well as also energy derived from solid, gaseous and/or liquid fuels, of energy from biomass as well as industrial waste heat, wherein energy storage is effected in heat storage blocks (2, 30, 62), in which are embedded evaporation tubes (17, 31), heatable by the energy storage, into which drips a liquid condensate at predetermined quantity whereby in the evaporation tubes (17, 31) vapor forms whose thermal capacity is utilizable for heating purposes or secondary energy production, and wherein the condensate is recycled, **characterized in that**
above the evaporation tubes (17, 31) disposed in the heat storage blocks (2, 30, 62) a two-part vessel (32) comprised of an upper first and a lower second part is placed, in which, in the upper part implemented as a vapor collection chamber (36), the vapors or vapor condensate can be collected which subsequently are condensable by means of a heat exchanger and, by means of a shut-off device (37, 40), are dischargeable into the lower part, functioning as a dosing chamber (35), of the vessel (32).

2. Heat store as in claim 1, **characterized in that**
above the evaporation tubes (17, 31) and coinciding with them tube sections (34) interconnected with the evaporation tubes (17, 31) are disposed and are guided through the bottom of the vessel (32) upwardly through the dosing chamber (35) and project into the vapor collection chamber (36), wherein the tube sections (34), in the region of the dosing chamber (35) in its interior, comprise openings (38) through which the condensate flows into the evaporation tubes (17, 31) and evaporates within them.

3. Heat store as in claim 1 or 2, **characterized in that**
the evaporation tubes (17, 31) are armoured with steel wire (17a) or ribs (20) of sheet steel or another material are welded onto the evaporation tubes (17, 31) to achieve good thermal contact between the evaporation tubes (17, 31) and the thermal storage mass.

4. Heat store as in claim 1, **characterized in that**
above the evaporation tubes (17, 31) are provided nozzle-shaped directing elements (6, 7, 8, 16) that distribute the condensate uniformly onto the evaporation tubes (17, 31).

5. Heat store as in one of the preceding claims, **characterized in that** a row of the heat storage blocks (2, 30, 62) is permanently connected by means of a condensate dosing tube (82) as well as by means of a vapor collection tube (84) forming a fixed unit.

6. Heat store as in one of the preceding claims, **characterized in that** on the vessel (32) as a safeguard against pressure build-up in the vapor collection volume [*sic*: chamber] (36) a partially water-filled U-tube (32a) connected to the atmosphere is provided whose water column withstands the vapor pressure obtaining in the vapor chamber (36).

7. Heat store as in one of the preceding claims, **characterized in that** within the heat storage blocks (2, 30, 62) for the energy storage a combustion chamber (23) is disposed for mounting a gas or oil burner (21), wherein the rectangular heat storage blocks (2, 30, 62) are disposed at a certain distance (s) from one another for the formation of off-gas channels (22, 63) through which the off-gases flow and emit their heat to the heat storage mass.

8. Heat store as in one of the preceding claims, **characterized in that** the energy stored in the heat storage mass can be utilized for air heating, wherein the warm air after the heating collects under a warm air collection hood (70) and from there can be distributed to a heating entity.

9. Heat store as in one of the preceding claims, **characterized in that** the off-gases and the warm air are air-tight separatable from one another to avoid mixing the two gases, wherein the combustion process in the heat store can be implemented by means of the natural draft, chimney (77) or by means of an off-gas fan.

10. Heat store as in one of the preceding claims, **characterized in that** in the storage of energy from solid, liquid or gaseous fuels the residual energy of the off-gases, after leaving the heat store is conducted into an off-gas waste heat channel (79) and additionally cooled to increase the efficiency of the heat store.

11. Heat store as in one of the preceding claims, **characterized in that** for the combustion of solid, gaseous and/or liquid fuels within the heat store plant, such is preceded by a furnace chamber (28) which optionally also serves for storing the thermal energy.

12. Heat store as in one of the preceding claims, **characterized in that** for the storage of wind and/or solar energy the heat storage blocks (2, 30, 62) comprise channels (19) in each of which an electrical heating rod (9) is embedded for heating the heat storage blocks (2, 30, 62) to a temperature of preferably between 900°C to 1200°C.

13. Heat store as in claim 5, **characterized in that**
the individual rows of the heat storage plant comprised of heat storage blocks (2, 30, 62) with condensate dosing tube (82) and vapor collection tube (84) are connected to a vapor collection vessel (85), wherein the steam for operating a steam turbine (88) is removed from the vapor collection vessel (85).

14. Heat store as in one of the preceding claims, **characterized in that,**
in addition to a power generation plant by means of the steam, a two-component circulation is provided which is capable of generating the electrical power at low temperature and low pressure (900°C, 20 bar) of the work medium.

15. Use of the heat store as in one of the preceding claims, **characterized in that** the stored heat is utilizable for generating high-pressure steam that can subsequently be utilized for electrical power generation.

## Revendications

1. Accumulateur thermique universel destiné au stockage de différents types d'énergie, par exemple, une énergie renouvelable, l'énergie éolienne ou solaire, le courant de nuit et l'énergie électrique en général tout comme l'énergie issue de combustibles solides, gazeux et/ou liquides, l'énergie issue de la biomasse et l'énergie sous forme de chaleur fournie par les déchets industriels, le stockage de l'énergie s'effectuant dans des blocs accumulateurs thermiques (2, 30, 62), dans lesquels sont incorporés des tubes d'évaporation (17, 31) pouvant être chauffés par le stockage de l'énergie et dans lesquels est introduite goutte à goutte une quantité prédéterminée d'un condensat liquide, générant ainsi de la vapeur dans les tubes d'évaporation (17,31), dont la capacité calorifique peut être utilisée à des fins de chauffage ou de production d'énergie secondaire, et le condensat circulant dans un circuit,
**caractérisé en ce qu'au**-dessus des tubes d'évaporation (17, 31) disposés dans les blocs accumulateurs thermiques (2, 30, 62) est placé un récipient (32) comportant deux parties, une première partie supérieure et une deuxième partie inférieure, la partie supérieure faisant office de chambre collectrice (36) pouvant collecter les vapeurs chaudes ou condensées, lesquelles, par la suite, peuvent être condensées dans un échangeur de chaleur et introduites, via un dispositif d'arrêt (37, 40), dans la partie inférieure faisant office de chambre de dosage (35) du récipient (32).

2. Accumulateur thermique selon la revendication 1,
**caractérisé en ce qu'au**-dessus des tubes d'évaporation (17, 31), en coïncidence avec ces derniers, sont disposés des tronçons de tubes (34) communiquant avec les tubes d'évaporation (17, 31) et qui, en haut, traversent le fond du récipient (32) et la chambre de dosage (35) pour pénétrer dans la chambre collectrice de vapeur (36), les tronçons de tubes (34) présentant à l'intérieur de la chambre de dosage (35) des orifices (38) à travers lesquels le condensat entre dans les tubes d'évaporation (17, 31) pour s'évaporer à l'intérieur de ceux-ci.

3. Accumulateur thermique selon la revendication 1 ou 2,
**caractérisé en ce que** les tubes d'évaporation (17, 31) sont armés de fil d'acier (17a) ou que des ailettes (20) en tôle d'acier ou en un autre matériau sont soudées sur les tubes d'évaporation (17, 31) pour obtenir un bon contact thermique entre les tubes d'évaporation (17, 31) et la masse accumulatrice de chaleur.

4. Accumulateur thermique selon la revendication 1,
**caractérisé en ce qu'au-**dessus des tubes d'évaporation (17, 31) sont prévus des éléments de réglage (6, 7, 8, 16) assurant la répartition uniforme du condensat entre les tubes d'évaporation (17, 31).

5. Accumulateur thermique selon l'une quelconque des revendications précédentes, **caractérisé en ce qu'une** rangée des blocs accumulateurs de chaleur (2, 30, 62) sont solidement fixés l'un à l'autre à l'aide d'un tube de dosage du condensat (82) et d'un tube collecteur de vapeur (84) pour former un ensemble solide.

6. Accumulateur thermique selon l'une quelconque des revendications précédentes, **caractérisé en ce que,** pour protéger le récipient (32) contre la montée de pression, celui-ci comporte un tube en U (32a) en partie rempli d'eau et relié à l'atmosphère, dont la colonne d'eau résiste à la pression de vapeur régnant dans la chambre de vapeur (36).

7. Accumulateur thermique selon l'une quelconque des revendications précédentes, **caractérisé en ce qu'aux** fins du stockage de l'énergie, une chambre de combustion (23) est disposée à l'intérieur des blocs accumulateurs thermiques (2, 30, 62) sur laquelle on peut placer un brûleur à gaz ou à mazout (21), les blocs accumulateurs thermiques (2, 30, 62) parallélépipédiques étant espacés l'un de l'autre à une distance déterminée et formant des conduits de gaz de fumée (22, 63) pour le passage des gaz de fumée qui transmettent leur chaleur à la masse accumulatrice de chaleur.

8. Accumulateur thermique selon l'une quelconque des revendications précédentes, **caractérisé en ce que** l'énergie stockée dans la masse accumulatrice de chaleur peut être utilisée pour le chauffage d'air, l'air chaud ainsi réchauffé s'accumulant sous une hotte de collecte d'air chaud (70), à partir de laquelle il peut être acheminé vers un objet de chauffage.

9. Accumulateur thermique selon l'une quelconque des revendications précédentes, **caractérisé en ce que,** pour éviter tout mélangeage des gaz de fumée et de l'air chaud, ceux-ci peuvent être séparés hermétiquement les uns de l'autre à l'aide de la masse accumulatrice de chaleur, le processus de combustion pouvant s'effectuer dans l'accumulateur thermique au moyen du tirage naturel, cheminée (77), ou au moyen d'une soufflerie à gaz de fumée (78).

10. Accumulateur thermique selon l'une quelconque des revendications précédentes, **caractérisé en ce que,** lors du stockage de l'énergie issue de combustibles solides, liquides ou gazeux, l'énergie résiduelle des gaz de fumée quittant l'accumulateur thermique est introduite dans un conduit d'échappement (79) et refroidie supplémentairement pour augmenter le rendement de l'accumulateur thermique.

11. Accumulateur thermique selon l'une quelconque des revendications précédentes, **caractérisé en ce que,** pour la combustion de combustibles solides, gazeux et/ou liquides dans l'installation à accumulation thermique, une chambre de combustion (28) est prévue en amont de ladite installation laquelle chambre de combustion servant le cas échéant également au stockage de l'énergie thermique.

12. Accumulateur thermique selon l'une quelconque des revendications précédentes, **caractérisé en ce que,** pour le stockage d'énergie éolienne et/ou d'énergie solaire, les blocs accumulateurs thermiques (2, 30, 62) sont dotés de conduits (19), dont chacun présente une cartouche chauffante (9) incorporée pour le chauffage des blocs accumulateurs thermiques (2, 30, 62) à des températures comprises de préférence entre 900°C et 1200°C.

13. Accumulateur thermique selon la revendication 5,
**caractérisé en ce que** les rangées individuelles de l'installation à accumulation thermique consistant en blocs accumulateurs thermiques (2, 30, 62) avec tube de dosage de condensat (82) et tube collecteur de vapeur (84) sont reliées à un récipient collecteur de vapeur (85), l'alimentation en vapeur d'eau d'une turbine à vapeur d'eau (88) s'effectuant à partir du récipient collecteur de vapeur (85).

14. Accumulateur thermique selon l'une quelconque des revendications précédentes, **caractérisé en ce qu'outre** une installation de production d'électricité à partir de la vapeur d'eau, il existe un circuit bifluide capable de produire l'électricité à une faible température et une faible pression (900°C, 20 bar) du fluide de travail.

15. Utilisation de l'accumulateur thermique selon l'une quelconque des revendications précédentes,
**caractérisée en ce que** la chaleur stockée peut être utilisée pour la production de vapeur haute pression, laquelle, ensuite, est utilisable pour la production d'électricité.
